(19) Europäisches Patentamt / European Patent Office / Office européen des brevets

(11) **EP 3 259 909 B1**

(12) **FASCICULE DE BREVET EUROPEEN**

(45) Date de publication et mention
de la délivrance du brevet:
**31.03.2021 Bulletin 2021/13**

(21) Numéro de dépôt: **16714963.2**

(22) Date de dépôt: **18.02.2016**

(51) Int Cl.:
**H04N 19/107** *(2014.01)*   **H04N 19/147** *(2014.01)*
**H04N 19/176** *(2014.01)*   **H04N 19/13** *(2014.01)*
**H04N 19/12** *(2014.01)*   **H04N 19/124** *(2014.01)*
**H04N 19/194** *(2014.01)*   **H04N 19/94** *(2014.01)*

(86) Numéro de dépôt international:
**PCT/FR2016/050374**

(87) Numéro de publication internationale:
**WO 2016/132075 (25.08.2016 Gazette 2016/34)**

(54) **PROCÉDÉ DE CODAGE ET DÉCODAGE D'IMAGES, DISPOSITIF DE CODAGE ET DÉCODAGE ET PROGRAMMES D'ORDINATEUR CORRESPONDANTS**

BILDCODIERUNGS- UND DECODIERUNGSVERFAHREN, CODIERUNGS- UND DECODIERUNGSVORRICHTUNG SOWIE ENTSPRECHENDE COMPUTERPROGRAMME

IMAGE ENCODING AND DECODING METHOD, ENCODING AND DECODING DEVICE, AND CORRESPONDING COMPUTER PROGRAMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.02.2015 FR 1551425**

(43) Date de publication de la demande:
**27.12.2017 Bulletin 2017/52**

(73) Titulaire: **ORANGE**
**75015 Paris (FR)**

(72) Inventeurs:
• **HENRY, Félix**
**35760 Saint Gregoire (FR)**
• **HUANG, Bihong**
**35510 Cesson Sévigné (FR)**

(56) Documents cités:
**EP-A1- 1 549 074**

• **YAN YE ET AL: "Improved h.264 intra coding based on bi-directional intra prediction, directional transform, and adaptive coefficient scanning", 15TH IEEE INTERNATIONAL CONFERENCE ON IMAGE PROCESSING : ICIP 2008 ; SAN DIEGO, CALIFORNIA, USA, 12 - 15 OCTOBER 2008, IEEE, PISCATAWAY, NJ, USA, 12 octobre 2008 (2008-10-12), pages 2116-2119, XP031374452, ISBN: 978-1-4244-1765-0**
• **XIN ZHAO ET AL: "CE7: Mode-dependent transform, residual reordering and coefficient scanning for intra prediction residue", 4. JCT-VC MEETING; 95. MPEG MEETING; 20-1-2011 - 28-1-2011; DAEGU;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JCTVC-SITE/,, no. JCTVC-D284, 15 janvier 2011 (2011-01-15), XP030008324, ISSN: 0000-0013**
• **THOMAS WIEGAND ET AL: "Rate-Distortion Optimized Mode Selection for Very Low Bit Rate Video Coding and the Emerging H.263 Standard", IEEE TRANSACTIONS ON CIRCUITS AND SYSTEMS FOR VIDEO TECHNOLOGY, IEEE SERVICE CENTER, PISCATAWAY, NJ, US, vol. 6, no. 2, 1 avril 1996 (1996-04-01), XP011014299, ISSN: 1051-8215**

- **GARY J SULLIVAN ET AL: "Overview of the High Efficiency Video Coding (HEVC) Standard", IEEE TRANSACTIONS ON CIRCUITS AND SYSTEMS FOR VIDEO TECHNOLOGY, IEEE SERVICE CENTER, PISCATAWAY, NJ, US, vol. 22, no. 12, 1 décembre 2012 (2012-12-01), pages 1649-1668, XP011486324, ISSN: 1051-8215, DOI: 10.1109/TCSVT.2012.2221191**

**Description**

Domaine de l'invention

La présente invention se rapporte de manière générale au domaine du traitement d'images, et plus précisément au codage et au décodage d'images numériques et de séquences d'images numériques.

L'invention peut s'appliquer notamment, mais non exclusivement, au codage vidéo mis en œuvre dans les codeurs vidéo actuels AVC et HEVC et leurs extensions (MVC, 3D-AVC, MV-HEVC, 3D-HEVC, etc), ainsi qu'au décodage correspondant.

Arrière-plan de l'invention

Les codeurs vidéo actuels (MPEG, H.264, HEVC, ...) utilisent une représentation par blocs des images à coder. Les images sont subdivisées en blocs de forme carrée ou rectangulaire, lesquels sont susceptibles d'être subdivisés à leur tour de façon récursive.

Pour au moins un bloc considéré parmi les différents blocs obtenus, une prédiction de pixels du bloc considéré est mise en œuvre par rapport à des pixels de prédiction qui appartiennent soit à la même image (prédiction Intra), soit à une ou plusieurs images précédentes d'une séquence d'images (prédiction Inter) qui ont déjà été décodées. De telles images précédentes sont appelées classiquement images de référence et sont conservées en mémoire aussi bien au codeur qu'au décodeur. Au cours d'une telle prédiction, un bloc résidu est calculé par soustraction des pixels du bloc considéré, des pixels de prédiction. Les coefficients du bloc résidu calculé sont alors quantifiés après une éventuelle transformation mathématique, par exemple de type transformée en cosinus discrète (DCT), puis codés par un codeur entropique. Les données codées sont inscrites dans un signal de données destiné à être transmis à un décodeur.

Ledit signal de données comprend notamment :

- le type de prédiction (prédiction Intra, prédiction Inter, prédiction par défaut réalisant une prédiction pour laquelle aucune information n'est transmise au décodeur (« en anglais « skip »)) ;
- le mode de prédiction (direction de prédiction, composante d'image de référence, ...) ;
- le type de subdivision en sous-blocs ;
- le type de transformée, par exemple DCT 4x4, DCT 8x8, etc... ;
- les valeurs de pixels, les valeurs de coefficients transformés, amplitudes, signes de coefficients quantifiés des pixels contenus dans le bloc ou le sous-bloc considéré.

Une fois que le signal de données a été reçu par le décodeur, le décodage est fait image par image, et pour chaque image, bloc par bloc. Pour chaque bloc, les éléments correspondants du signal de données sont lus. La quantification inverse et la transformation inverse des coefficients des blocs sont effectuées pour produire un bloc résidu décodé. Puis, la prédiction du bloc est calculée et le bloc est reconstruit en ajoutant la prédiction au bloc résidu décodé.

De façon plus précise:

- une prédiction Intra d'un bloc d'une image courante consiste à prédire des pixels de ce bloc par rapport à des pixels déjà codés puis décodés de l'image courante qui peuvent être situés dans différentes directions prédéterminées, par exemple trente-cinq dans le standard HEVC,
- une prédiction Inter d'un bloc d'une image courante consiste à prédire certaines informations de codage associées à ce bloc, telles que par exemple :

  • le vecteur de mouvement temporel du bloc courant par rapport à un vecteur de mouvement temporel associé à un bloc de pixels de référence,
  • les pixels du bloc courant par rapport aux pixels d'un bloc de pixels de référence pointé par le vecteur de mouvement temporel et situé dans une autre image que l'image courante à laquelle appartient le bloc courant.

De tels types de prédiction sont très différents l'un de l'autre. Parfois, il s'avère que le type de prédiction (ex : Inter) sélectionné dans une telle méthode de codage/décodage est mal adapté au bloc courant à coder/décoder.

Il en résulte des performances de compression qui ne sont pas satisfaisantes.

Les documents EP1549074 A1 et XP031374452 divulguent que la mise en compétition d'un mode basé RDO requiert de déterminer un premier mode, obtenir un bloc prédicteur et calculer un bloc résidu, pour faire la comparaison basée RDO à un autre mode éventuellement sélectionné, qui pourrait être associé avec une autre type de prédiction, différent du premier mode.

Objet et résumé de l'invention

Un des buts de l'invention est de remédier à des inconvénients de l'état de la technique précité.

A cet effet, un objet de la présente invention concerne un procédé de codage selon la revendication 1.

Une telle disposition permet d'augmenter l'optimisation de la compression du bloc courant telle que déjà obtenue suite à la mise en œuvre du premier type de prédiction Inter, en affinant ce premier type de prédiction par un paramètre de codage associé à une prédiction du bloc courant d'un deuxième type, Intra. La prédiction du bloc courant est ainsi plus précise, ce qui a pour avantage d'améliorer significativement les performances de compression du signal de données à transmettre au décodeur.

Un type de prédiction regroupe un ensemble de prédicteurs associés chacun à un même paramètre ou à un même ensemble de paramètres.

Dans le cas d'une prédiction de type Intra, le paramètre de prédiction est la direction de prédiction sélectionnée parmi un ensemble de directions de prédiction prédéterminées (par exemple 35 directions dans le standard HEVC).

Dans le cas d'une prédiction de type Inter, au moins les deux paramètres de prédiction suivants sont considérés :

- l'index du vecteur de mouvement qui décrit le mouvement entre les pixels du bloc courant et les pixels d'un bloc qui a déjà été codé ou bien qui a déjà été codé puis décodé et qui appartient à une autre image que l'image courante,
- l'index de cette autre image.

L'invention permet avantageusement de tenir compte du bloc prédicteur obtenu à partir du mode de prédiction associé au premier type de prédiction Inter, lequel bloc est le meilleur prédicteur du bloc original à coder. De ce fait, un tel bloc prédicteur est le plus adapté pour déterminer le bloc candidat associé au mode de prédiction sélectionné parmi une pluralité de modes de prédiction selon un deuxième type Intra.

L'invention permet aussi, lorsqu'une prédiction Inter est mis en œuvre au codage, de sélectionner une prédiction Intra qui est apte à générer des blocs résidus proches du bloc résidu tel que calculé conformément à la prédiction Inter. Une telle disposition permet d'adapter le codage du bloc résidu d'un type de prédiction à l'autre.

Corrélativement, l'invention concerne un dispositif de codage selon la revendication 2, un programme d'ordinateur comportant des instructions de code de programme selon la revendication 3, et un support d'enregistrement lisible par un ordinateur sur lequel est enregistré un programme d'ordinateur selon la revendication 4.

De façon correspondante, l'invention concerne aussi un procédé de décodage selon la revendication 5.

Corrélativement, l'invention concerne un dispositif de décodage selon la revendication 6.

L'invention concerne encore un programme d'ordinateur comportant des instructions pour mettre en œuvre un procédé de décodage selon la revendication 7.

Un tel programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Encore un autre objet de l'invention vise aussi un support d'enregistrement lisible par un ordinateur, et comportant des instructions de programme d'ordinateur selon la revendication 8.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, un moyen d'enregistrement numérique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, un tel support d'enregistrement peut être un circuit intégré dans lequel le programme est incorporé, le circuit étant adapté pour exécuter le procédé en question ou pour être utilisé dans l'exécution de ce dernier.

Brève description des dessins

D'autres caractéristiques et avantages apparaîtront à la lecture de modes de réalisation préférés décrits en référence aux figures dans lesquelles :

- la figure 1A représente les étapes du procédé de codage selon un premier mode de réalisation de l'invention,
- la figure 1B représente une première alternative du procédé de codage selon un deuxième mode de réalisation de l'invention,
- la figure 1C représente une deuxième alternative du procédé de codage selon un deuxième mode de réalisation de l'invention,

- la figure 2A représente un dispositif de codage selon un premier mode de réalisation de l'invention,
- la figure 2B représente un dispositif de codage selon un deuxième mode de réalisation de l'invention,
- la figure 3A représente un dispositif de décodage selon un premier mode de réalisation de l'invention,
- la figure 3B représente un dispositif de décodage selon un deuxième mode de réalisation de l'invention,
- la figure 4A représente les étapes du procédé de décodage selon un premier mode de réalisation de l'invention,
- la figure 4B représente une première alternative du procédé de décodage selon un deuxième mode de réalisation de l'invention,
- la figure 4C représente une deuxième alternative du procédé de décodage selon un deuxième mode de réalisation de l'invention.

Description détaillée de la partie codage

Un premier mode de réalisation de l'invention va maintenant être décrit, dans lequel le procédé de codage selon l'invention est utilisé pour coder une image ou une séquence d'images selon un flux binaire proche de celui qu'on obtient par un codage mis en œuvre dans un codeur conforme à l'une quelconque des normes de codage vidéo actuelles ou à venir.

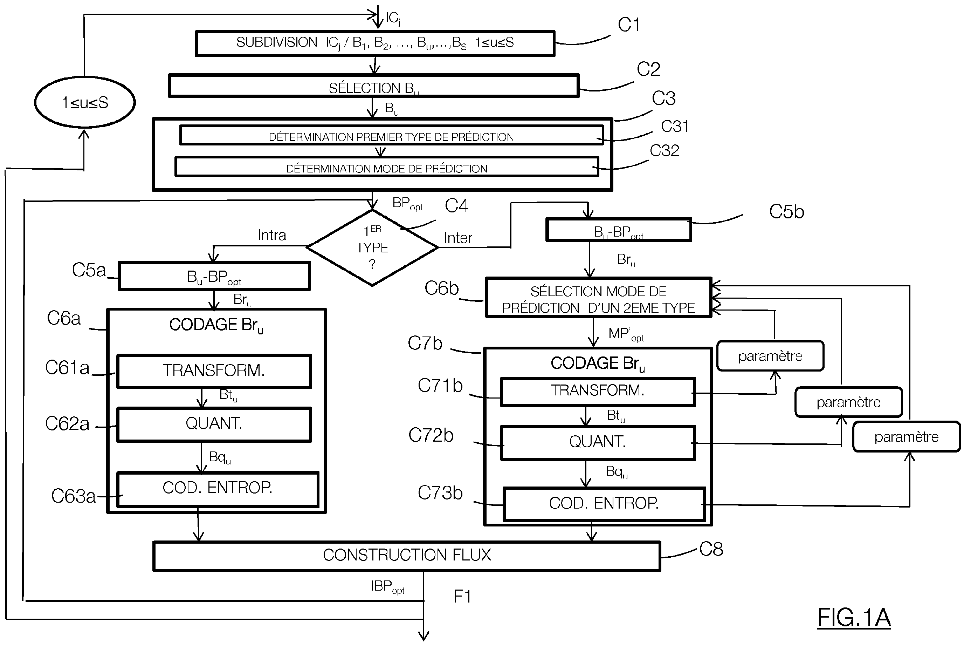

Dans ce premier mode de réalisation, le procédé de codage selon l'invention est par exemple implémenté de manière logicielle ou matérielle par modifications d'un tel codeur. Le procédé de codage selon l'invention est représenté sous la forme d'un algorithme comportant des étapes C1 à C8 telles que représentées à la **figure 1A.**

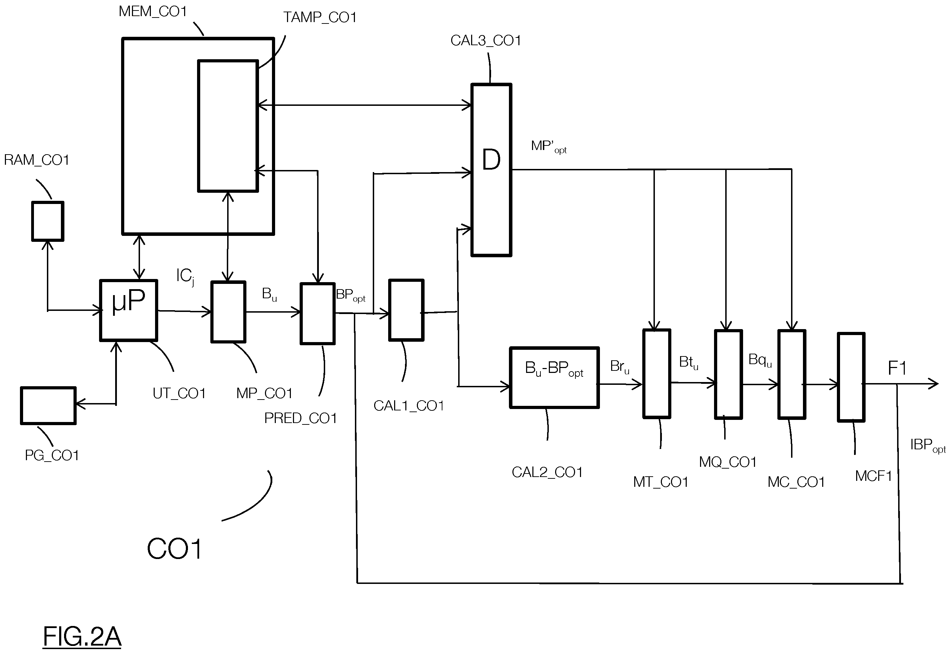

Selon le premier mode de réalisation de l'invention, le procédé de codage selon l'invention est implémenté dans un dispositif de codage CO1 représenté à la **figure 2A**.

Comme illustré en **figure 2A**, un tel dispositif de codage comprend une mémoire MEM_CO1 comprenant une mémoire tampon TAMP_CO1, une unité de traitement UT_CO1 équipée par exemple d'un microprocesseur $\mu$P et pilotée par un programme d'ordinateur PG_CO1 qui met en œuvre le procédé de codage selon l'invention. A l'initialisation, les instructions de code du programme d'ordinateur PG_CO1 sont par exemple chargées dans une mémoire RAM notée RAM_CO1, avant d'être exécutées par le processeur de l'unité de traitement UT_CO1.

Le procédé de codage représenté sur la **figure 1A** s'applique à toute image courante $IC_j$ fixe ou bien faisant partie d'une séquence de L images $IC_1$, ..., $IC_j$,..., $IC_L (1 \leq j \leq L)$ à coder.

Au cours d'une étape C1 représentée à la **figure 1A**, il est procédé, de façon connue en soi, au découpage d'une image courante $IC_j$ en une pluralité de blocs $B_1$, $B_2$, ..., $B_u$,..., $B_S$ $(1 \leq u \leq S)$. Une telle étape de partitionnement est mise en œuvre par un module logiciel de partitionnement MP_CO1 représenté sur la **figure 2A**, lequel module est piloté par le microprocesseur $\mu$P de l'unité de traitement UT_CO1. Il convient de noter qu'au sens de l'invention, le terme « bloc » signifie unité de codage (de l'anglais « coding unit »). Cette dernière terminologie est notamment utilisée dans la norme HEVC « ISO/IEC/23008-2 Recommandation ITU-T H.265 High Efficiency Video Coding (HEVC) ».

En particulier, une telle unité de codage regroupe des ensembles de pixels de forme rectangulaire ou carrée, encore appelés blocs, macroblocs, ou bien des ensembles de pixels présentant d'autres formes géométriques.

Lesdits blocs $B_1$, $B_2$, ..., $B_u$,..., $B_S$ sont destinés à être codés selon un ordre de parcours prédéterminé, qui est par exemple du type lexicographique. Cela signifie que les blocs sont codés les uns après les autres, de la gauche vers la droite.

D'autres types de parcours sont bien sûr possibles. Ainsi, il est possible de découper l'image $IC_j$ en plusieurs sous-images appelées slices et d'appliquer indépendamment un découpage de ce type sur chaque sous-image. Il est également possible de coder non pas une succession de lignes, comme expliqué ci-dessus, mais une succession de colonnes. Il est également possible de parcourir les lignes ou colonnes dans un sens ou dans l'autre.

Selon un exemple, les blocs $B_1$, $B_2$, ..., $B_u$,..., $B_S$ ont une forme carrée et contiennent tous K pixels, avec $K \geq 1$. Selon un mode préféré de réalisation, lesdits blocs sont de taille 4x4 ou 8x8 pixels.

En fonction de la taille de l'image qui n'est pas forcément un multiple de la taille des blocs, les derniers blocs à gauche et les derniers blocs en bas peuvent ne pas être carrés. Dans un mode alternatif de réalisation, les blocs peuvent être par exemple de taille rectangulaire et/ou non alignés les uns avec les autres.

Chaque bloc peut par ailleurs être lui-même divisé en sous blocs qui sont eux-mêmes subdivisibles.

Au cours d'une étape C2 représentée à la **figure 1A**, le codeur CO1 sélectionne comme bloc courant un premier bloc à coder $B_u$ de l'image $IC_j$, tel que par exemple le premier bloc $B_1$.

Au cours d'une étape C3 représentée à la **figure 1A**, il est procédé à la prédiction d'un premier type du bloc courant $B_u$. L'étape C3 comprend :

- une sous-étape C31 de détermination d'un premier type de prédiction du bloc courant, par exemple Intra ou Inter,
- une sous-étape C32 de détermination d'un mode de prédiction associé au premier type de prédiction déterminé.

Dans le cas où le premier type de prédiction déterminé est Intra, le mode de prédiction comprend au moins un paramètre de prédiction qui est une direction de prédiction sélectionnée parmi un ensemble de directions de prédiction prédéterminées (par exemple 35 directions dans le standard HEVC).

Dans le cas où le premier type de prédiction déterminé est Inter, le mode de prédiction comprend au moins les deux paramètres de prédiction suivants :

- l'index du vecteur de mouvement qui décrit le mouvement entre les pixels du bloc courant et les pixels d'un bloc qui a déjà été codé ou bien qui a déjà été codé puis décodé et qui appartient à une autre image que l'image courante,
- l'index de cette autre image.

Selon un mode préféré de réalisation, le premier type de prédiction déterminé est Inter. De façon connue en soi, le bloc $B_u$ est alors prédit par rapport à une pluralité de blocs prédicteurs candidats. Chacun des blocs prédicteurs candidats est un bloc de pixels qui a été déjà codé ou bien qui a déjà été codé puis décodé. De tels blocs prédicteurs sont préalablement stockés dans la mémoire tampon TAMP_CO1 du codeur CO1 telle que représentée à la **figure 2A**.

A l'issue de l'étape C3 de prédiction, un bloc prédicteur optimal $BP_{opt}$ est obtenu suite à une mise en compétition desdits blocs prédicteurs candidats, par exemple par minimisation d'un critère débit distorsion bien connu de l'homme du métier. Le bloc $BP_{opt}$ est considéré comme une approximation du bloc courant $B_u$. Les informations relatives à cette prédiction sont destinées à être inscrites dans un signal ou flux de données F1 à transmettre à un décodeur qui sera décrit plus en détail dans la suite de la description.

L'étape C3 est mise en œuvre par un processeur ou module logiciel de codage prédictif PRED_CO1 représenté sur la **figure 2A**, lequel est piloté par le microprocesseur µP de l'unité de traitement UT_CO1.

Au cours d'une étape C4 représentée à la **figure 1A**, conformément à l'invention, il est procédé à une vérification du premier type de prédiction appliquée au bloc courant $B_u$ lors de l'étape C3.

L'étape C4 est mise en œuvre par un processeur ou module logiciel de calcul CAL1_CO1 représenté sur la **figure 2A**, lequel est piloté par le microprocesseur µP de l'unité de traitement UT_CO1.

Dans le cas où la prédiction d'un premier type appliquée est une prédiction Intra, il est procédé classiquement, au cours d'une étape C5a) représentée à la **figure 1A**, à la comparaison des données relatives au bloc courant $B_u$ aux données du bloc prédicteur $BP_{opt}$. Plus précisément, au cours de cette étape, il est procédé au calcul de la différence entre le bloc courant $B_u$ et le bloc prédicteur $BP_{opt}$ obtenu.

Un ensemble de données résiduelles, appelé bloc résidu $Br_u$ est alors obtenu à l'issue de l'étape C5a).

L'étape C5a) est mise en œuvre par un processeur ou module logiciel CAL2_CO1 de calcul de données résiduelles tel que représenté sur la **figure 2A**, lequel est piloté par le microprocesseur µP de l'unité de traitement UT_CO1.

Au cours d'une étape C6a) représentée à la **figure 1A,** il est procédé classiquement à un codage des données du bloc résidu $Br_u$.

De façon connue en soi, au cours de l'étape C6a), il est procédé, au cours d'une sous-étape C61a), à une transformation du bloc résidu $Br_u$ selon une opération classique de transformation directe, pour produire un bloc transformé $Bt_u$.

La sous-étape C61a) est mise en œuvre par un processeur ou module logiciel MT_CO1 de transformation représenté sur la **figure 2A**, lequel est piloté par le microprocesseur µP de l'unité de traitement UT_CO1.

Le processeur MT_CO1 est apte à mettre en œuvre une transformation directe telle que par exemple une transformation en cosinus discrètes de type DCT (abréviation anglaise de « Discrète Cosine Transform »), une transformation en sinus discrètes de type DST (abréviation anglaise de « Discrète Sine Transform »), une transformation en ondelettes discrètes de type DWT (abréviation anglaise de « Discrète Wavelet Transform »).

De façon connue en soi, au cours de l'étape C6a), il est procédé en outre, au cours d'une sous-étape C62a) représentée à la **figure 1A**, à une quantification des données du bloc transformé $Bt_u$, pour produire un bloc quantifié $Bq_u$ formé de coefficients quantifiés. Une telle étape de quantification est par exemple de type scalaire ou vectoriel.

La sous-étape C62a) est effectuée au moyen d'un processeur ou module logiciel de quantification MQ_CO1 tel que représenté à la **figure 2A**, lequel module est piloté par le microprocesseur µP de l'unité de traitement UT_CO1.

De façon connue en soi, au cours de l'étape C6a), il est procédé en outre, au cours d'une sous-étape C63a) représentée à la **figure 1A**, au codage des coefficients quantifiés du bloc $Bq_u$. Un tel codage est par exemple un codage entropique de type CABAC ("Context Adaptive Binary Arithmetic Coder" en anglais) ou bien encore un codage entropique de type arithmétique ou de Huffman.

La sous-étape C63a) est mise en œuvre par un processeur ou module logiciel de codage MC_CO1 représenté sur la **figure 2A**, lequel module est piloté par le microprocesseur µP de l'unité de traitement UT_CO1.

Dans le cas où le premier type de prédiction appliquée est Inter, il est d'abord procédé classiquement, au cours d'une étape C5b) représentée à la **figure 1A**, à la comparaison des données relatives au bloc courant $B_u$ aux données du bloc prédicteur $BP_{opt}$. Plus précisément, au cours de cette étape, il est procédé au calcul de la différence entre le bloc courant $B_u$ et le bloc prédicteur $BP_{opt}$ obtenu.

Un ensemble de données résiduelles, appelé bloc résidu $Br_u$ est alors obtenu à l'issue de l'étape C5b).

L'étape C5b) est mise en œuvre par le processeur ou module logiciel CAL2_CO1 de calcul de données résiduelles représenté sur la **figure 2A**.

Puis, conformément à l'invention, il est procédé, au cours d'une étape C6b) représentée à la **figure 1A**, à la sélection d'un mode de prédiction associé à une prédiction d'un deuxième type, différent dudit premier type précité. Selon un mode préféré de réalisation, la prédiction du deuxième type est une prédiction Intra qui est, de façon connue en soi, associée à une pluralité de modes de prédiction définis chacun par une direction de prédiction prédéterminée. Dans le cas de la prédiction Intra proposée par exemple dans le standard HEVC, il existe trente-cinq directions de prédiction possibles, ce qui revient à déterminer trente-cinq blocs prédicteurs candidats disponibles pour la prédiction du bloc courant $B_u$. Selon l'invention, l'étape C6b) consiste à sélectionner parmi les blocs prédicteurs candidats disponibles, le prédicteur candidat qui minimise la distorsion entre le bloc prédicteur optimal $BP_{opt}$ qui a été obtenu à l'issue de l'étape C3 précitée de prédiction d'un premier type et chacun desdits blocs prédicteurs candidats disponibles. De la même façon que dans le cas de la prédiction du premier type précitée, chacun des blocs prédicteurs candidats mis en compétition au cours de l'étape C6b) est un bloc de pixels qui a été déjà codé ou bien codé puis décodé. De tels blocs prédicteurs sont préalablement stockés dans la mémoire tampon TAMP_CO1 du codeur CO1, telle que représentée à la **figure 2A**.

A l'issue de l'étape C6b), un bloc prédicteur optimal $BP'_{opt}$ est obtenu. Un tel bloc prédicteur optimal $BP'_{opt}$ est alors associé à son mode de prédiction optimal $MP'_{opt}$ qui représente le mode de prédiction d'un deuxième type sélectionné selon l'invention.

L'étape C6b) est mise en œuvre par un processeur ou module logiciel de calcul CAL3_CO1 tel que représenté sur la **figure 2A**, lequel est piloté par le microprocesseur $\mu$P de l'unité de traitement UT_CO1.

Au cours d'une étape C7b) représentée à la **figure 1A**, conformément à l'invention, il est procédé à un codage des données du bloc résidu $Br_u$ à l'aide d'au moins un paramètre de codage déterminé à partir du mode de prédiction $MP'_{opt}$ sélectionné à l'étape C6b).

Au cours de l'étape C7b), il est procédé, au cours d'une sous-étape C71b), à une transformation du bloc résidu $Br_u$ selon une opération classique de transformation directe, pour produire un bloc transformé $Bt_u$.

Selon un mode de réalisation de l'invention, l'opération de transformation directe est choisie comme étant une transformation spécifique au mode de prédiction sélectionné à l'étape C6b). Selon un premier exemple, si le mode de prédiction Intra sélectionné est le mode 0 ou 1 du standard HEVC, la transformation directe la plus adaptée à ce mode étant la transformation DST, c'est cette dernière qui est choisie. Selon un deuxième exemple, si le mode de prédiction Intra sélectionné est l'un des modes 2 à 34 du standard HEVC, la transformation directe la plus adaptée à ce mode étant la transformation DCT, c'est cette dernière qui est choisie.

La sous-étape C71b) est mise en œuvre par le processeur ou module logiciel MT_CO1 de transformation représenté sur la **figure 2A**.

Au cours de l'étape C7b), il est procédé en outre, au cours d'une sous-étape C72b) représentée à la **figure 1A**, à une quantification des données du bloc transformé $Bt_u$, pour produire un bloc quantifié $Bq_u$ formé de coefficients quantifiés. Une telle étape de quantification est par exemple de type scalaire ou vectoriel.

Selon un mode de réalisation de l'invention, alternativement à la sélection de la transformation effectuée à la sous-étape C71b) ou en combinaison avec cette sélection, l'opération de quantification est choisie comme étant une quantification spécifique au mode de prédiction sélectionné à l'étape C6b). Selon un premier exemple, si le mode de prédiction Intra sélectionné est le mode 0, 1 ou 26 du standard HEVC, c'est le pas de quantification propre au standard HEVC qui est choisi comme étant le plus adapté à ce mode. Selon un deuxième exemple, si le mode de prédiction Intra sélectionné est l'un des modes 2 à 25, 27 à 34 du standard HEVC, le pas de quantification le plus adapté à ce mode est le double du pas de quantification propre au standard HEVC. Une telle disposition permet d'adapter la quantification à l'énergie spécifique du bloc décodé $BD_u$ calculé à partir du bloc prédicteur $BP_{opt}$ obtenu à l'étape C3.

La sous-étape C72b) est effectuée au moyen du processeur ou module logiciel de quantification MQ_CO1 représenté à la **figure 2A**.

Au cours de l'étape C7b), il est procédé en outre, au cours d'une sous-étape C73b) représentée à la **figure 1A**, au codage des coefficients quantifiés du bloc $Bq_u$. Un tel codage est par exemple un codage entropique de type CABAC ("Context Adaptive Binary Arithmetic Coder" en anglais) ou bien encore un codage entropique de type arithmétique ou de Huffman.

Selon un mode de réalisation de l'invention, alternativement à la sélection de la transformation effectuée à la sous-étape C71b) et/ou à la sélection de la quantification effectuée à la sous-étape C72b), ou bien en combinaison avec l'une et/ou l'autre de ces sélections, l'opération de codage entropique est choisie comme étant une opération de codage spécifique au mode de prédiction sélectionné à l'étape C6b). En d'autres termes, les probabilités utilisées pour le codage des coefficients du bloc $Bq_u$ dépendent du mode de prédiction $MP'_{opt}$ sélectionné à l'étape C6b). Par exemple, si le mode de prédiction Intra sélectionné permet d'obtenir un bloc résidu $Br_u$ de faible amplitude, la probabilité d'apparition de coefficients à faible amplitude est augmentée. A l'inverse si le mode de prédiction Intra sélectionné permet d'obtenir

un bloc résidu $Br_u$ d'amplitude élevée, la probabilité d'apparition de coefficients à faible amplitude est diminuée.

La sous-étape C73b) est mise en œuvre par le processeur ou module logiciel de codage MC_CO1 représenté sur la **figure 2A**.

Au cours d'une étape C8 représentée à la **figure 2A**, il est procédé à la construction d'un signal ou flux de données F1 qui contient les données codées à l'issue soit de l'étape C6a), soit de l'étape C7b) précitées.

L'étape C8 est mise en œuvre par un processeur ou module logiciel MCF1 de construction de signal de données, tel que représenté sur la **figure 2A**.

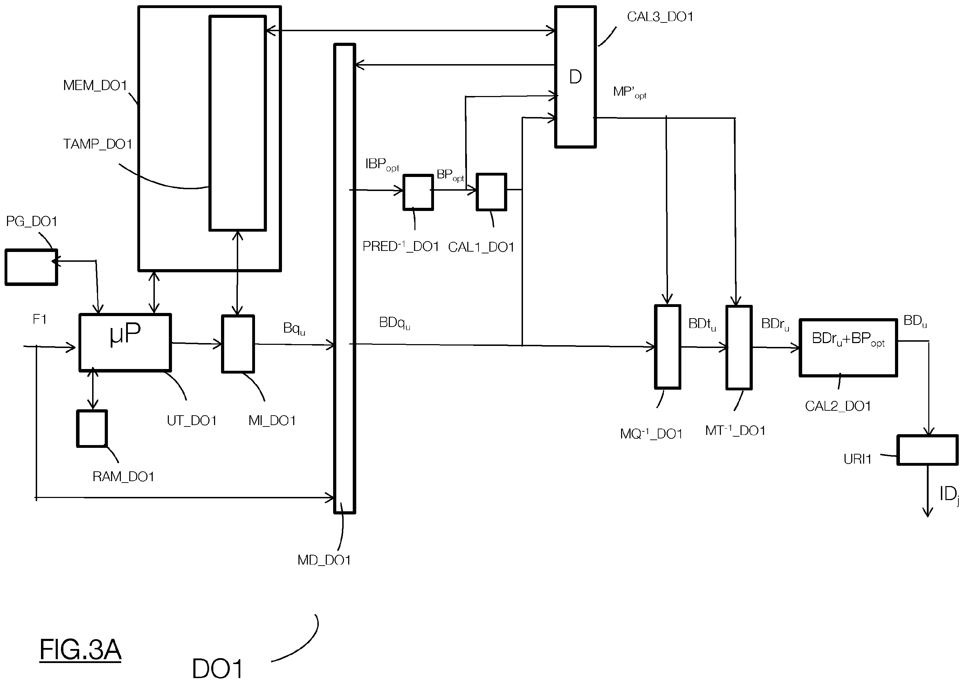

Le signal de données F1 est ensuite transmis par un réseau de communication (non représenté) à un terminal distant. Celui-ci comporte le décodeur DO1 représenté à la **figure 3A**.

De façon connue en soi, le signal de données F1 comprend en outre certaines informations encodées par le codeur CO1, telles que le premier type de prédiction (Inter ou Intra) appliqué à l'étape C3, et le cas échéant, le mode de prédiction sélectionné, l'indice du bloc prédicteur obtenu $BP_{opt}$ obtenu à l'issue de l'étape C3, noté $IBP_{opt}$, le type de partitionnement du bloc courant $B_u$ si ce dernier a été partitionné, l'indice d'image de référence et le vecteur de mouvement utilisés dans le mode de prédiction Inter.

De façon connue en soi, il est ensuite procédé au décodage du bloc résidu $Br_u$. Un bloc résidu décodé $BDr_u$ est alors obtenu. Il est alors procédé à la construction du bloc décodé $BD_u$, en ajoutant au bloc prédit $BP_{opt}$ le bloc résidu décodé $BDr_u$.

Il est à noter que le bloc décodé $BD_u$ est le même que le bloc décodé obtenu à l'issue du procédé de décodage de l'image $IC_j$ qui sera décrit plus loin dans la description. Le bloc décodé $BD_u$ est ainsi rendu disponible pour être utilisé par le codeur CO1 représenté sur la **figure 2A**.

Les étapes de codage C1 à C8 qui viennent d'être décrites ci-dessus sont ensuite mises en œuvre pour chacun des blocs $B_1$, $B_2$, ..., $B_u$,..., $B_S$ à coder de l'image courante $IC_j$ considérée.

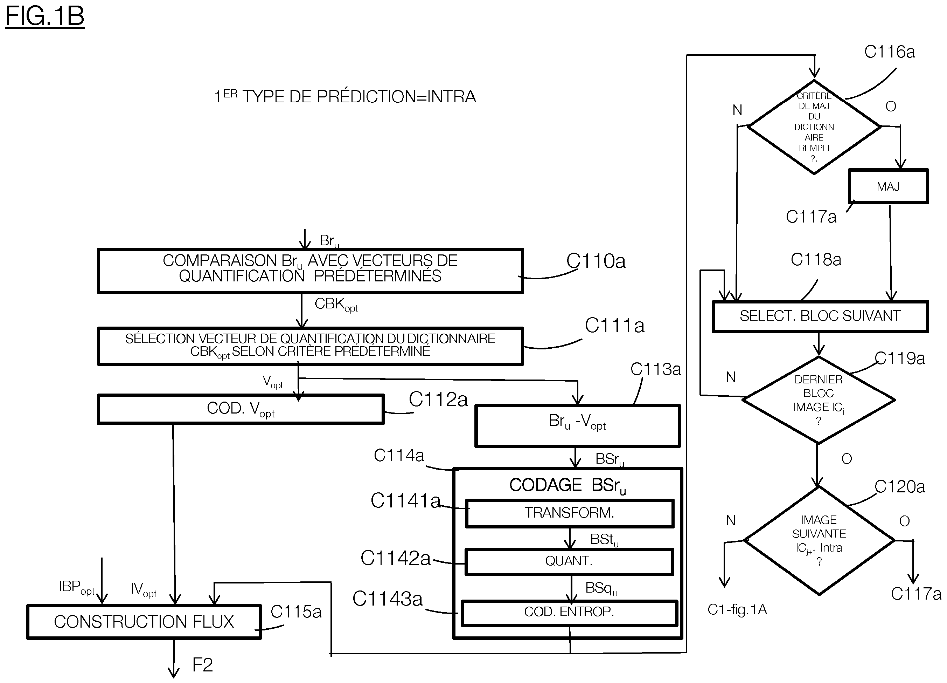

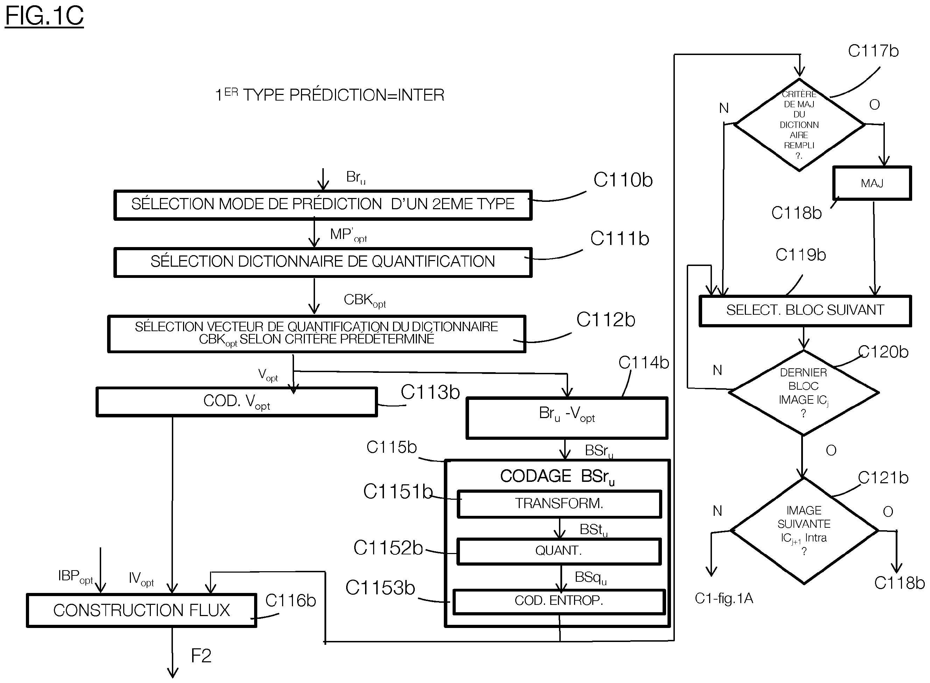

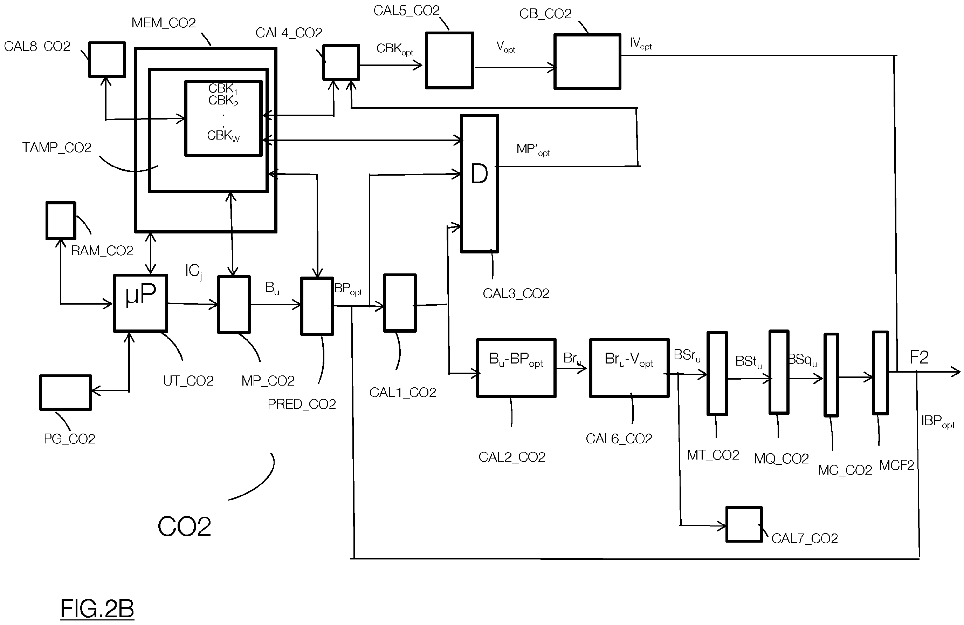

Un deuxième mode de réalisation de l'invention va maintenant être décrit en référence aux **figures 1B, 1C** et **2B**. Dans ce deuxième mode de réalisation, chaque bloc à coder est soumis à un codage par quantification scalaire, comme cela a été décrit en référence à la **figure 1A**, qui est avantageusement combiné à un codage par quantification vectorielle.

Selon le deuxième mode de réalisation, le procédé de codage selon l'invention est implémenté dans un dispositif de codage CO2 représenté à la **figure 2B**. Comme illustré en **figure 2B**, un tel dispositif de codage comprend une mémoire MEM_CO2 comprenant une mémoire tampon TAMP_CO2, une unité de traitement UT_CO2 équipée par exemple d'un microprocesseur μP et pilotée par un programme d'ordinateur PG_CO2 qui met en œuvre le procédé de codage selon l'invention. A l'initialisation, les instructions de code du programme d'ordinateur PG_CO2 sont par exemple chargées dans une mémoire RAM notée RAM_CO2, avant d'être exécutées par le processeur de l'unité de traitement UT_CO2.

En outre, le codeur CO2 comprend des processeurs ou modules logiciels MP_CO2, PRED_CO2, CAL1_CO2, CAL3_CO2 qui sont respectivement identiques aux processeurs ou modules logiciels MP_CO1, PRED_CO1, CAL1_CO1, CAL3_CO1 du codeur CO1 représenté sur la **figure 2A**. Pour cette raison, les processeurs ou modules logiciels MP_CO2, PRED_CO2, CAL1_CO2, CAL3_CO2 ne seront pas à nouveau décrits en détail.

La **figure 1B** décrit plus précisément comment la quantification vectorielle est mise en œuvre lorsqu'il a été vérifié, à l'issue de l'étape C4 de la **figure 1A**, que le premier type de prédiction est Intra.

De la même façon que dans le premier mode de réalisation, il est procédé au calcul d'un bloc résidu $Br_u$. Une telle étape étant identique à l'étape C5a) de la **figure 1A**, elle ne sera pas décrite à nouveau.

A la suite du calcul du bloc résidu $Br_u$, au cours d'une étape C110a) représentée à la **figure 1B**, il est procédé à une comparaison du premier bloc résidu $Br_u$ avec une pluralité de vecteurs de quantification. De façon connue en soi, ces vecteurs de quantification appartiennent à un ou plusieurs dictionnaires de vecteurs de quantification disponibles au codeur, notés $CBK_1$, $CBK_2$,..., $CBK_W$. De tels dictionnaires sont préalablement stockés dans la mémoire tampon TAMP_CO2 du codeur CO2, telle que représentée à la **figure 2B.**

Plus précisément, l'étape C110a) consiste à sélectionner un dictionnaire de vecteurs de quantification parmi les dictionnaires disponibles $CBK_1$, $CBK_2$,..., $CBK_W$.

L'étape C110a) est mise en oeuvre par un processeur ou module logiciel de calcul CAL4_CO2 tel que représenté sur la **figure 2B,** lequel est piloté par le microprocesseur μP de l'unité de traitement UT_CO2.

Conformément à l'invention, une telle sélection est mise en œuvre en fonction de l'un et/ou de l'autre des éléments suivants:

- les caractéristiques de la prédiction (par exemple, le mode Intra choisi parmi les 35 modes Intra du standard HEVC) qui a été appliquée à l'étape C3 de la **figure 1A**,
- les caractéristiques fréquentielles du bloc prédicteur $BP_{opt}$,
- la taille du bloc courant $B_u$,
- des caractéristiques de l'image courante $IC_j$, comme sa taille ou son énergie.

Dans le mode préféré de réalisation, W=70, c'est-à-dire que :

- dans le cas d'un bloc courant $B_u$ de taille 4x4, il existe un dictionnaire différent pour chacun des 35 modes Intra considérés dans le standard HEVC,
- dans le cas d'un bloc courant $B_u$ de taille 8x8, il existe un dictionnaire différent pour chacun des 35 modes Intra considérés dans le standard HEVC.

Conformément à ce mode préféré de réalisation, le dictionnaire sélectionné dépend donc à la fois de la taille du bloc courant $B_u$ et du mode de prédiction sélectionné.

Le dictionnaire sélectionné à l'issue de l'étape C110a) est noté $CBK_{opt}$.

Au cours d'une étape C111a) représentée à la **figure 1B,** il est procédé à une sélection d'un des vecteurs de quantification du dictionnaire $CBK_{opt}$ qui a été sélectionné à l'étape C110a).

Un vecteur de quantification optimal $V_{opt}$ est obtenu suite à une mise en compétition desdits vecteurs de quantification du dictionnaire $CBK_{opt}$, par exemple :

- soit par minimisation d'un critère débit distorsion bien connu de l'homme du métier,
- soit par minimisation de l'erreur quadratique moyenne calculée entre les données du bloc résidu $Br_u$ et les données correspondantes de chacun des vecteurs de quantification du dictionnaire $CBK_{opt}$.

Le vecteur de quantification optimal $V_{opt}$ est considéré comme une approximation du bloc résidu $Br_u$. Les informations relatives à cette prédiction sont destinées à être inscrites dans le signal de données F2 précité.

L'étape C111a) est mise en oeuvre par un processeur ou module logiciel de calcul CAL5_CO2 tel que représenté sur la **figure 2B**, lequel est piloté par le microprocesseur $\mu$P de l'unité de traitement UT_CO2.

Au cours d'une étape C112a) représentée à la **figure 1B**, il est procédé à un codage du vecteur de quantification $V_{opt}$ sélectionné à l'issue de l'étape C111a). Une telle étape consiste à représenter l'index noté $IV_{opt}$ du vecteur de quantification $V_{opt}$ sous forme binaire. Par exemple, si le dictionnaire $CBK_{opt}$ auquel appartient le vecteur de quantification $V_{opt}$ contient 256 vecteurs de quantification, alors le vecteur de quantification $V_{opt}$ peut être représenté sur 8 bits, ce qui permet d'identifier précisément ce vecteur parmi tous les autres vecteurs de quantification du dictionnaire $CBK_{opt}$.

L'étape C112a) est mise en oeuvre par un processeur ou module logiciel de codage binaire CB_CO2 tel que représenté sur la **figure 2B**, lequel est piloté par le microprocesseur $\mu$P de l'unité de traitement UT_CO2.

Au cours d'une étape C113a) représentée à la **figure 1B**, il est procédé à la comparaison des données relatives au bloc résidu $Br_u$ aux données du vecteur $V_{opt}$. Plus précisément, au cours de cette étape, il est procédé au calcul de la différence entre le bloc résidu $Br_u$ et le vecteur $V_{opt}$.

Un deuxième ensemble de données, appelé bloc résidu secondaire $BSr_u$, est alors obtenu à l'issue de l'étape C113a).

L'étape C113a) est mise en œuvre par le processeur ou module logiciel CAL6_CO2 représenté sur la **figure 2B**.

Au cours d'une étape C114a) représentée à la **figure 1B**, il est procédé, conformément à l'invention, à un codage des données du bloc résidu secondaire $BSr_u$.

Au cours de l'étape C114a), il est procédé, au cours d'une sous-étape C1141a), à une transformation du bloc résidu secondaire $BSr_u$ selon une opération classique de transformation directe, pour produire un bloc transformé BStu.

La sous-étape C1141a) est mise en œuvre par le processeur ou module logiciel MT_CO2 de transformation représenté sur la **figure 2B**.

Au cours de l'étape C114a), il est procédé en outre, au cours d'une sous-étape C1142a) représentée à la **figure 1B**, à une quantification des données du bloc transformé $BSt_u$, pour produire un bloc quantifié $BSq_u$ formé de coefficients quantifiés. Une telle étape de quantification est par exemple de type scalaire ou vectoriel.

La sous-étape C1142a) est effectuée au moyen du processeur ou module logiciel de quantification MQ_CO2 tel que représenté à la **figure 2B**.

De façon connue en soi, au cours de l'étape C114a), il est procédé en outre, au cours d'une sous-étape C1143a) représentée à la **figure 1B**, au codage des coefficients quantifiés du bloc $BSq_u$. Un tel codage est par exemple un codage entropique de type CABAC ("Context Adaptive Binary Arithmetic Coder" en anglais) ou bien encore un codage entropique de type arithmétique ou de Huffman.

La sous-étape C1143a) est mise en œuvre par le processeur ou module logiciel de codage MC_CO2 représenté sur la **figure 2B**.

Au cours d'une étape C115a) représentée à la **figure 1B**, il est procédé à la construction du signal ou flux de données F2 qui contient :

- les données codées à l'issue de l'étape C114a) précitée,
- l'index $IV_{opt}$ du vecteur de quantification optimal $V_{opt}$ déterminé à l'étape C112a) précitée.

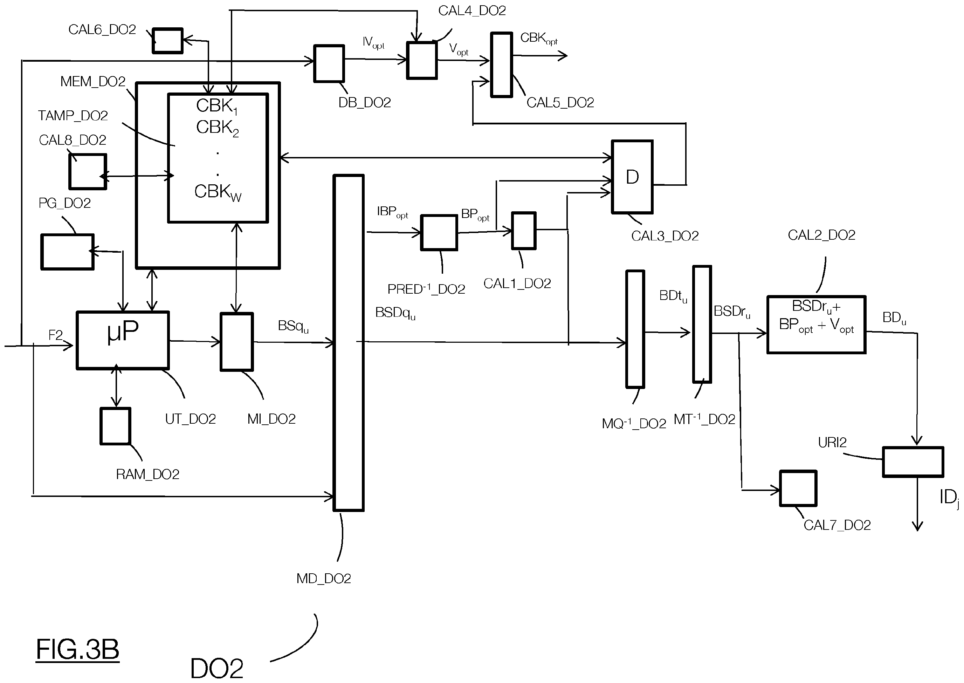

L'étape C115a) est mise en oeuvre par un processeur ou module logiciel MCF2 de construction de signal de données, tel que représenté sur la **figure 2B**, lequel est piloté par le microprocesseur μP de l'unité de traitement UT_CO2.
Le signal de données F2 est ensuite transmis par un réseau de communication (non représenté) à un terminal distant. Celui-ci comporte le décodeur DO2 représenté à la **figure 3B**.
De façon connue en soi, le signal de données F2 comprend en outre certaines informations encodées par le codeur CO2, telles que le premier type de prédiction (Inter ou Intra) appliqué à l'étape C3, et le cas échéant, le mode de prédiction sélectionné, l'indice du bloc prédicteur obtenu $BP_{opt}$ obtenu à l'issue de l'étape C3, noté $IBP_{opt}$, le type de partitionnement du bloc courant $B_u$ si ce dernier a été partitionné, l'indice d'image de référence et le vecteur de déplacement utilisés dans le mode de prédiction Inter.
De façon connue en soi, il est ensuite procédé au décodage du bloc résidu $BSr_u$. Un bloc résidu décodé $BSDr_u$ est alors obtenu. Il est alors procédé à la construction du bloc décodé $BD_u$ en ajoutant au bloc prédit $BP_{opt}$ le bloc résidu décodé $BSDr_u$.
Il est à noter que le bloc décodé $BD_u$ est le même que le bloc décodé obtenu à l'issue du procédé de décodage de l'image $IC_j$ qui sera décrit plus loin dans la description. Le bloc décodé $BD_u$ est ainsi rendu disponible pour être utilisé par le codeur CO2 de la **figure 2B**.
Au cours d'une étape C116a) représentée à la **figure 1B**, conformément au deuxième mode de réalisation de l'invention, il est procédé à un test qui consiste à vérifier si un critère de mise à jour des dictionnaires $CBK_1$, $CBK_2$,..., $CBK_W$ est rempli ou non.
Selon une première variante, un tel critère consiste à comparer le nombre de coefficients non nuls dans le bloc résidu $BSr_u$ à un seuil prédéterminé. Par exemple, le critère de mise à jour est considéré rempli si le nombre de coefficients non nuls est supérieur à 3.
Selon une deuxième variante, un tel critère consiste à comparer le débit du codage du bloc résidu $BSr_u$ à un seuil prédéterminé. Par exemple, le critère de mise à jour est considéré rempli si le débit du codage du bloc résidu $BSr_u$ est supérieur à 10 bits.
L'étape C116a) est mise en oeuvre par un processeur ou module logiciel de calcul CAL7_CO2 tel que représenté sur la **figure 2B**, lequel est piloté par le microprocesseur μP de l'unité de traitement UT_CO2.
Si le critère de mise à jour est rempli, au cours d'une étape C117a) représentée à la **figure 1B**, il est procédé à une mise à jour d'au moins un des dictionnaires $CBK_1$, $CBK_2$,..., $CBK_W$.
L'étape C117a) est mise en œuvre par un processeur ou module logiciel de calcul CAL8_CO2 tel que représenté sur la **figure 2B**, lequel est piloté par le microprocesseur μP de l'unité de traitement UT_CO2.
Selon une première variante, l'étape C117a) consiste à remettre à jour l'ensemble des dictionnaires courants $CBK_1$, $CBK_2$,..., $CBK_W$.
Selon une deuxième variante préférée, il est procédé uniquement à une mise à jour du dictionnaire $CBK_{opt}$.
Dans le mode préféré de réalisation, le dictionnaire $CBK_{opt}$ est mis à jour de la façon suivante.
Le vecteur $V_{opt}$, ainsi que ses voisins contenus dans le dictionnaire $CBK_{opt}$, sont tout d'abord considérés. Les voisins sont notés $V_{opt-R}$, $V_{opt-R+1}$, $V_{opt-R+2}$,..., $V_{opt-1}$, $V_{opt}$, $V_{opt+1}$,..., $V_{opt+R-2}$, $V_{opt+R-1}$, $V_{opt+R}$.
Le paramètre R qui définit le nombre de voisins suivants et précédents du vecteur $V_{opt}$ est prédéterminé, par exemple à la valeur 5. Selon cette configuration, les 5 vecteurs voisins qui suivent et précédent le vecteur $V_{opt}$ sont considérés.
Puis des vecteurs $W_{opt+n}$, n appartenant à <-R,+R>, sont construits en vue de la mise à jour, de la façon suivante :

$$W_{opt+n}=V_{opt+n}+alpha*f(n)*((V_{opt}+BSr_u)-V_{opt+n})$$

où :

- alpha est un paramètre prédéterminé, par exemple égal à 0.1,
- et f(n) est une valeur qui dépend de la distance entre l'index n et l'index opt.

Par exemple, dans le mode préféré de réalisation :

$$f(n)=0.2* (5-n)/5$$

Les vecteurs $W_{opt+n}$ avec n allant de -5 à +5 sont donc calculés, et viennent remplacer respectivement les vecteurs $V_{opt+n}$ dans le dictionnaire $CBK_{opt}$.
L'ensemble des dictionnaires courants $CBK_1$, $CBK_2$,..., $CBK_W$ est donc ainsi remis à jour.
Dans un mode alternatif de réalisation, les paramètres de la mise à jour peuvent être différents suivant la taille de l'image. En effet, si l'image est petite, un apprentissage rapide de la statistique de l'image courante $IC_j$ est nécessaire.

Par exemple :

- pour une taille d'image appartenant à une vidéo simple définition SD (abréviation anglaise de « Standard Définition »), soit moins de 720 pixels de haut et moins de 1280 pixels de large, un paramètre alpha égal à 0.3 est retenu ;
- pour une taille d'image appartenant à une vidéo haute définition HD (Abréviation anglaise de « High Définition »), soit entre 720 et 1080 pixels de haut et entre 1280 et 1920 pixels de large, ou bien supérieure à 1280x1920 pixels, un paramètre alpha égal à 0.2 est retenu ;
- pour une taille d'image supérieure à la taille d'une image HD, un paramètre égal à 0.1 est retenu.

Il est bien sûr possible de remettre à jour les dictionnaires d'autres façons. Par exemple, il est possible d'appliquer le même type de mise à jour de vecteur de quantification que dans le mode préféré. Toutefois, la mise à jour, au lieu de s'appliquer aux vecteurs voisins du vecteur de quantification $V_{opt}$ dans le dictionnaire $CBK_{opt}$, s'applique aux vecteurs proches de $V_{opt}+BSDr_u$ au sens de la distorsion. En variante, la mise à jour s'applique à des vecteurs proches de $V_{opt}+BSDr_u$ non seulement dans le dictionnaire $CBK_{opt}$, mais dans l'ensemble des dictionnaires courants $CBK_1$, $CBK_2$,..., $CBK_W$.

A la suite de l'étape C117a) précitée, il est procédé, au cours d'une étape C118a) représentée sur la **figure 1B**, à la sélection du bloc suivant de l'image courante $IC_j$. Puis les étapes de codage de bloc décrites ci-dessus sont à nouveau mises en œuvre pour ce bloc suivant.

Si à l'issue de l'étape C116a) précitée, le critère de mise à jour n'est pas rempli, il est procédé, au cours de l'étape C118a) précitée, à la sélection du bloc suivant de l'image courante $IC_j$. Puis les étapes de codage de bloc décrites ci-dessus sont à nouveau mises en œuvre pour ce bloc suivant.

Au cours d'une étape C119a) représentée à la **figure 1B**, le codeur CO2 de la **figure 2B** teste si le bloc courant qui a été codé conformément au procédé de codage décrit ci-dessus est le dernier bloc de l'image courante $IC_j$.

Si tel n'est pas le cas, l'étape C118a) précitée est mise en œuvre.

Si le bloc courant est le dernier bloc de l'image courante $IC_j$, au cours d'une étape C120a) représentée à la **figure 1B**, le codeur CO2 de la **figure 2B** teste si l'image courante suivante $IC_{j+1}$ est une image de type Intra ou non.

Dans le cas où l'image courante suivante $IC_{j+1}$ est de type Intra, avant de procéder au codage des blocs de cette image conformément au procédé de codage selon l'invention, l'étape C117a) de mise à jour des dictionnaires est mise en œuvre.

Dans l'exemple représenté, les vecteurs de quantification du dictionnaire $CBK_{opt}$ sont chacun initialisés à une valeur respective prédéterminée.

Dans le cas où l'image courante suivante $IC_{j+1}$ n'est pas de type Intra, il est procédé directement au codage des blocs de cette image conformément au procédé de codage de la **figure 1A** et éventuellement au codage par quantification vectorielle des **figures 1B** et **1C.**

La **figure 1C** décrit plus précisément comment la quantification vectorielle est mise en œuvre lorsqu'il a été vérifié, à l'issue de l'étape C4 de la **figure 1A**, que le premier type de prédiction est Inter.

De la même façon que dans le premier mode de réalisation, il est procédé au calcul d'un bloc résidu $Br_u$. Une telle étape étant identique à l'étape C5b) de la **figure 1A**, elle ne sera pas décrite à nouveau.

A la suite du calcul du bloc résidu $Br_u$, au cours d'une étape C110b) représentée à la **figure 1C**, il est procédé à la sélection d'un mode de prédiction optimal $MP'_{opt}$ qui représente le mode de prédiction d'un deuxième type sélectionné selon l'invention. Une telle étape étant en tout point identique à l'étape C6b) de la **figure 1A**, elle ne sera pas décrite à nouveau en détail.

L'étape C110b) est mise en oeuvre par un processeur ou module logiciel de calcul CAL3_CO2 tel que représenté sur la **figure 2B**, lequel est piloté par le microprocesseur $\mu$P de l'unité de traitement UT_CO2.

Au cours d'une étape C111b) représentée à la **figure 1C**, il est procédé à la sélection d'un dictionnaire de vecteurs de quantification $CBK_{opt}$ qui appartient à un ou plusieurs dictionnaires de vecteurs de quantification disponibles au codeur, notés $CBK_1$, $CBK_2$,..., $CBK_W$. De tels dictionnaires sont préalablement stockés dans la mémoire tampon TAMP_CO2 du codeur CO2, telle que représentée à la **figure 2B.**

Conformément au deuxième mode de réalisation de l'invention, le dictionnaire $CBK_{opt}$ sélectionné est celui qui est associé au mode prédiction optimal $MP'_{opt}$ qui a été sélectionné à l'étape C110b).

L'étape C111b) est mise en œuvre par un processeur ou module logiciel de calcul CAL4_CO2 tel que représenté sur la **figure 2B**, lequel est piloté par le microprocesseur $\mu$P de l'unité de traitement UT_CO2.

Au cours d'une étape C112b) représentée à la **figure 1C**, il est procédé à une sélection d'un des vecteurs de quantification du dictionnaire $CBK_{opt}$ qui a été sélectionné à l'étape C111b).

Une telle étape étant identique à l'étape C111a) de la **figure 1B**, elle ne sera pas à nouveau décrite en détail.

A l'issue de l'étape C112b), un vecteur de quantification optimal $V_{opt}$ est obtenu.

Le vecteur de quantification optimal $V_{opt}$ est considéré comme une approximation du bloc résidu $Br_u$. Les

informations relatives à cette prédiction sont destinées à être inscrites dans le signal de données F2 précité.

L'étape C112b) est mise en œuvre par le processeur ou module logiciel de calcul CAL5_CO2 de la **figure 2B.**

Au cours d'une étape C113b) représentée à la **figure 1C**, il est procédé à un codage du vecteur de quantification $V_{opt}$ sélectionné à l'issue de l'étape C112b). Une telle étape étant identique à l'étape C112a) de la **figure 1B**, elle ne sera pas à nouveau décrite en détail. A l'issue de l'étape C113b), est obtenu l'index $IV_{opt}$ du vecteur de quantification $V_{opt}$.

L'étape C113b) est mise en œuvre par le processeur ou module logiciel de codage binaire CB_CO2 tel que représenté sur la **figure 2B.**

Au cours d'une étape C114b) représentée à la **figure 1C**, il est procédé à la comparaison des données relatives au bloc résidu $Br_u$ aux données du vecteur $V_{opt}$. Plus précisément, au cours de cette étape, il est procédé au calcul de la différence entre le bloc résidu $Br_u$ et le vecteur $V_{opt}$.

Un deuxième ensemble de données, appelé bloc résidu secondaire $BSr_u$, est alors obtenu à l'issue de l'étape C114b).

L'étape C114b) est mise en œuvre par le processeur ou module logiciel CAL6_CO2 de la **figure 2B.**

Au cours d'une étape C115b) représentée à la **figure 1C**, il est procédé, conformément à l'invention, à un codage des données du bloc résidu secondaire $BSr_u$.

Au cours de l'étape C115b), il est procédé, au cours d'une sous-étape C1151b), à une transformation du bloc résidu secondaire $BSr_u$ selon une opération classique de transformation directe, pour produire un bloc transformé BStu.

La sous-étape C1151b) est mise en œuvre par le processeur ou module logiciel MT_CO2 de la **figure 2B.**

Au cours de l'étape C115b), il est procédé en outre, au cours d'une sous-étape C1152b) représentée à la **figure 1C**, à une quantification des données du bloc transformé $BSt_u$, pour produire un bloc quantifié $BSq_u$ formé de coefficients quantifiés. Une telle étape de quantification est par exemple de type scalaire ou vectoriel.

La sous-étape C1152b) est effectuée au moyen du processeur ou module logiciel de quantification MQ_CO2 de la **figure 2B.**

De façon connue en soi, au cours de l'étape C115b), il est procédé en outre, au cours d'une sous-étape C1153b) représentée à la **figure 1C**, au codage des coefficients quantifiés du bloc $BSq_u$. Un tel codage est par exemple un codage entropique de type CABAC ("Context Adaptive Binary Arithmetic Coder" en anglais) ou bien encore un codage entropique de type arithmétique ou de Huffman.

La sous-étape C1153b) est mise en œuvre par le processeur ou module logiciel de codage MC_CO2 de la **figure 2B.**

Au cours d'une étape C116b) représentée à la **figure 1C**, il est procédé à la construction du signal ou flux de données F2 qui contient :

- les données codées à l'issue de l'étape C115b) précitée,
- l'index $IV_{opt}$ du vecteur de quantification optimal $V_{opt}$ déterminé à l'étape C113b) précitée.

L'étape C116b) est mise en œuvre par le processeur ou module logiciel MCF2 de la **figure 2B.**

Le signal de données F2 est ensuite transmis par un réseau de communication (non représenté) à un terminal distant. Celui-ci comporte le décodeur DO2 représenté à la **figure 3B.**

De façon connue en soi, le signal de données F2 comprend en outre certaines informations encodées par le codeur CO2, telles que le premier type de prédiction (Inter ou Intra) appliqué à l'étape C3, et le cas échéant, le mode de prédiction sélectionné, l'indice du bloc prédicteur obtenu $BP_{opt}$ obtenu à l'issue de l'étape C3, noté $IBP_{opt}$, le type de partitionnement du bloc courant $B_u$ si ce dernier a été partitionné, l'indice d'image de référence et le vecteur de déplacement utilisés dans le mode de prédiction Inter.

De façon connue en soi, il est ensuite procédé au décodage du bloc résidu $BSr_u$. Un bloc résidu décodé $BSDr_u$ est alors obtenu. Il est alors procédé à la construction du bloc décodé $BD_u$ en ajoutant au bloc prédit $BP_{opt}$ le bloc résidu décodé $BSDr_u$.

Il est à noter que le bloc décodé $BD_u$ est le même que le bloc décodé obtenu à l'issue du procédé de décodage de l'image $IC_j$ qui sera décrit plus loin dans la description. Le bloc décodé $BD_u$ est ainsi rendu disponible pour être utilisé par le codeur CO2 de la **figure 2B.**

Au cours d'une étape C117b) représentée à la **figure 1C**, conformément au deuxième mode de réalisation de l'invention, il est procédé à un test qui consiste à vérifier si un critère de mise à jour des dictionnaires $CBK_1$, $CBK_2$,..., $CBK_W$ est rempli ou non.

Une telle étape étant identique à l'étape C116a) de la **figure 1B**, elle ne sera pas à nouveau décrite en détail.

L'étape C117b) est mise en œuvre par le processeur ou module logiciel de calcul CAL7_CO2 de la **figure 2B.**

Si le critère de mise à jour est rempli, au cours d'une étape C118b) représentée à la **figure 1C**, il est procédé à une mise à jour d'au moins un des dictionnaires $CBK_1$, $CBK_2$,..., $CBK_W$.

L'étape C118b) est mise en œuvre par le processeur ou module logiciel de calcul CAL8_CO2 de la **figure 2B.**

Une telle étape étant identique à l'étape C117a) de la **figure 1B**, elle ne sera pas à nouveau décrite en détail.

A la suite de l'étape C118b) précitée, il est procédé, au cours d'une étape C119b) représentée sur la **figure 1C**, à la sélection du bloc suivant de l'image courante $IC_j$. Puis les étapes de codage de bloc décrites ci-dessus sont à nouveau mises en œuvre pour ce bloc suivant.

Si à l'issue de l'étape C117b) précitée, le critère de mise à jour n'est pas rempli, il est procédé, au cours de l'étape C118b) précitée, à la sélection du bloc suivant de l'image courante $IC_j$. Puis les étapes de codage de bloc décrites ci-dessus sont à nouveau mises en œuvre pour ce bloc suivant.

Au cours d'une étape C120b) représentée à la **figure 1C**, le codeur CO2 de la **figure 2B** teste si le bloc courant qui a été codé conformément au procédé de codage décrit ci-dessus est le dernier bloc de l'image courante $IC_j$.

Si tel n'est pas le cas, l'étape C119b) précitée est mise en œuvre.

Si le bloc courant est le dernier bloc de l'image courante $IC_j$, au cours d'une étape C121b) représentée à la **figure 1C**, le codeur CO2 de la **figure 2B** teste si l'image courante suivante $IC_{j+1}$ est une image de type Intra ou non.

Dans le cas où l'image courante suivante $IC_{j+1}$ est de type Intra, avant de procéder au codage des blocs de cette image conformément au procédé de codage selon l'invention, l'étape C118b) de mise à jour des dictionnaires est mise en œuvre.

Dans l'exemple représenté, les vecteurs de quantification du dictionnaire $CBK_{opt}$ sont chacun initialisés à une valeur respective prédéterminée.

Dans le cas où l'image courante suivante $IC_{j+1}$ n'est pas de type Intra, il est procédé directement au codage des blocs de cette image conformément au procédé de codage de la **figure 1A** et éventuellement au codage par quantification vectorielle des **figures 1B** et **1C**.

Description détaillée de la partie décodage

Un premier mode de réalisation de l'invention va maintenant être décrit, dans lequel le procédé de décodage selon l'invention est utilisé pour décoder un signal ou flux de données représentatif d'une image ou d'une séquence d'images qui est apte à être décodé par un décodeur conforme à l'une quelconque des normes de décodage vidéo actuelles ou à venir.

Dans ce premier mode de réalisation, le procédé de décodage selon l'invention est par exemple implémenté de manière logicielle ou matérielle par modifications d'un tel décodeur.

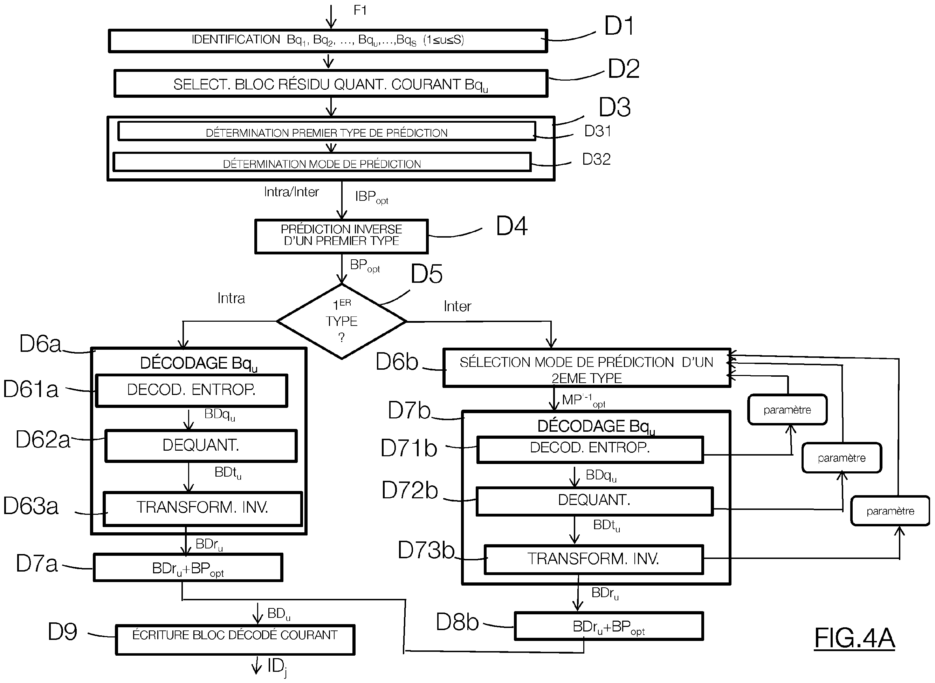

Le procédé de décodage selon l'invention est représenté sous la forme d'un algorithme comportant des étapes D1 à D9 telles que représentées à la **figure 4A**.

Selon ce premier mode de réalisation, le procédé de décodage selon l'invention est implémenté dans un dispositif de décodage ou décodeur DO1 représenté à la **figure 3A**.

Comme illustré en **figure 3A**, selon ce premier mode de réalisation de l'invention, le décodeur DO1 comprend une mémoire MEM_DO1 qui comprend elle-même une mémoire tampon TAMP_DO1, une unité de traitement UT_DO1 équipée par exemple d'un microprocesseur $\mu P$ et pilotée par un programme d'ordinateur PG_DO1 qui met en œuvre le procédé de décodage selon l'invention. A l'initialisation, les instructions de code du programme d'ordinateur PG_DO1 sont par exemple chargées dans une mémoire RAM notée RAM_DO1, avant d'être exécutées par le processeur de l'unité de traitement UT_DO1.

Le procédé de décodage représenté sur la **figure 4A** s'applique à un signal ou flux de données représentatif d'une image courante $IC_j$ à décoder qui est fixe ou qui appartient à une séquence d'images à décoder.

A cet effet, des informations représentatives de l'image courante $IC_j$ à décoder sont identifiées dans le signal de données F1 reçu au décodeur DO1 et tel que délivré à l'issue du procédé de codage de la **figure 1A**.

En référence à la **figure 4A**, au cours d'une étape D1, il est procédé à l'identification dans le signal F1 des blocs résidus quantifiés $Bq_1$, $Bq_2$,..., $Bq_u$, ..., $Bq_S$ ($1 \leq u \leq S$) associés respectivement aux blocs $B_1$, $B_2$, ..., $B_u$,..., $B_S$ codés précédemment conformément à l'ordre lexicographique précité, selon l'alternative de codage mise en œuvre à l'étape C6a) ou C7b) de la **figure 1A.**

Une telle étape d'identification est mise en œuvre par un processeur ou module logiciel d'identification MI_DO1 d'analyse de flux, tel que représenté à la **figure 3A**, ledit module étant piloté par le microprocesseur $\mu P$ de l'unité de traitement UT_DO1.

D'autres types de parcours que celui qui vient d'être décrit ci-dessus sont bien sûr possibles et dépendent de l'ordre de parcours choisi au codage.

Dans l'exemple représenté, les blocs $B_1$, $B_2$, ..., $B_u$,..., $B_S$ à décoder ont une forme carrée et contiennent tous K pixels, avec $K \geq 1$. Selon un mode préféré de réalisation, lesdits blocs à décoder sont de taille 4x4 ou 8x8 pixels.

En fonction de la taille de l'image qui n'est pas forcément un multiple de la taille des blocs, les derniers blocs à gauche et les derniers blocs en bas peuvent ne pas être carrés. Dans un mode alternatif de réalisation, les blocs peuvent être par exemple de taille rectangulaire et/ou non alignés les uns avec les autres.

Chaque bloc à décoder peut par ailleurs être lui-même divisé en sous blocs qui sont eux-mêmes subdivisibles.

Au cours d'une étape D2 représentée à la **figure 4A**, le décodeur DO1 de la **figure 3A** sélectionne comme bloc courant le premier bloc quantifié $Bq_u$ qui contient des données quantifiées qui ont été codées au cours de la sous-étape C63a) ou C73b) de la **figure 1A.**

Au cours d'une étape D3 représentée à la **figure 4A**, il est procédé à un décodage des informations relatives au premier type de prédiction du bloc courant $B_u$ tel que mis en œuvre au codage au cours de l'étape C3 de la **figure 1A**, et qui ont été inscrites dans le signal de données F1. A cet effet, l'étape D3 comprend :

- une sous-étape D31 de détermination d'un premier type de prédiction du bloc courant, par exemple Intra ou Inter,
- une sous-étape D32 de détermination d'un mode de prédiction associé au premier type de prédiction déterminé.

Dans le cas où le premier type de prédiction déterminé est Intra, le mode de prédiction déterminé comprend au moins un paramètre de prédiction qui est une direction de prédiction sélectionnée parmi un ensemble de directions de prédiction prédéterminées (par exemple 35 directions dans le standard HEVC).

Dans le cas où le premier type de prédiction déterminé est Inter, le mode de prédiction comprend au moins les deux paramètres de prédiction suivants :

- l'index du vecteur de mouvement qui décrit le mouvement entre les pixels du bloc courant et les pixels d'un bloc qui a déjà été décodé et qui appartient à une autre image que l'image courante,
- l'index de cette autre image.

Selon un mode préféré de réalisation :

- c'est le premier type de prédiction Inter appliqué à l'étape C3 qui est déterminé dans le signal de données F1 au cours de la sous-étape D31,
- c'est l'index du vecteur de mouvement et l'index de l'image de référence utilisés lors de cette prédiction Inter qui sont déterminés dans le signal de données F1 au cours de la sous-étape D32.

Au cours de l'étape D3 est également déterminé dans le signal de données F1 l'indice du bloc prédicteur obtenu $BP_{opt}$ obtenu à l'issue de l'étape C3, noté $IBP_{opt}$, et le type de partitionnement du bloc courant $B_u$ si ce dernier a été partitionné.

Une telle étape D3 de décodage est mise en œuvre par le module de décodage MD_DO1 représenté sur la **figure 3A.**

Au cours d'une étape D4 représentée à la **figure 4A**, il est procédé au décodage prédictif du bloc courant à décoder à l'aide de l'indice du bloc prédicteur $BP_{opt}$ qui a été décodé au cours de l'étape D3 précitée. A cet effet, de façon connue en soi, il est procédé, en association avec l'indice décodé du bloc prédicteur $BP_{opt}$, à la sélection, dans la mémoire tampon TAMP_DO1 du décodeur DO1 de la **figure 3A**, du bloc prédicteur $BP_{opt}$ correspondant, lequel figure parmi une pluralité de blocs prédicteurs candidats préalablement stockés dans la mémoire tampon TAMP_DO1. Chacun des blocs prédicteurs candidats est un bloc de pixels qui a déjà été décodé.

L'étape D4 est mise en œuvre par un processeur ou module logiciel $PRED^{-1}$_DO1 de prédiction inverse, tel que représenté sur la **figure 3A**, lequel est piloté par le microprocesseur $\mu P$ de l'unité de traitement UT_DO1.

Au cours d'une étape D5 représentée à la **figure 4A**, conformément à l'invention, il est procédé à une vérification du premier type de prédiction appliquée au bloc courant $B_u$ lors de l'étape C3.

L'étape D5 est mise en œuvre par un processeur ou module logiciel de calcul CAL1_DO1 représenté sur la **figure 3A**, lequel est piloté par le microprocesseur $\mu P$ de l'unité de traitement UT_DO1.

Dans le cas où le premier type de prédiction appliqué au codage est Intra, au cours d'une étape D6a) représentée à la **figure 4A**, il est procédé classiquement à un décodage des données du bloc résidu quantifié $Bq_u$.

De façon connue en soi, au cours de l'étape D6a), il est procédé, au cours d'une sous-étape D61a), à un décodage de l'ensemble de coefficients quantifiés $Bq_u$ courant.

Un tel décodage est par exemple un décodage entropique de type CABAC ou bien encore un décodage entropique de type arithmétique ou de Huffman.

A l'issue de la sous-étape D61a) précitée, est obtenu un ensemble $BDq_u$ d'informations numériques associées à l'ensemble de coefficients quantifiés $Bq_u$ courant.

Une telle sous-étape D61a) de décodage est mise en œuvre par le module de décodage entropique MD_DO1 représenté sur la **figure 3A.**

De façon connue en soi, au cours de l'étape D6a), il est procédé en outre, au cours d'une sous-étape D62a) représentée à la **figure 4A**, à une déquantification des informations numériques obtenues à la suite de la sous-étape D61a), selon une opération classique de déquantification qui est l'opération inverse de la quantification mise en œuvre lors de la sous-étape de quantification C62a) de la **figure 1A**. Un ensemble de coefficients déquantifiés $BDt_u$ courant est alors obtenu à l'issue de la sous-étape D62a). Une telle étape de déquantification est par exemple de type scalaire ou vectoriel.

La sous-étape D62a) est effectuée au moyen d'un processeur ou module logiciel $MQ^{-1}\_DO1$ de quantification inverse, tel que représenté à la **figure 3A**, lequel module est piloté par le microprocesseur $\mu P$ de l'unité de traitement UT_DO1.

De façon connue en soi, au cours de l'étape D6a), il est procédé en outre, au cours d'une sous-étape D63a) représentée à la **figure 4A**, à une transformation de l'ensemble de coefficients déquantifiés $BDt_u$ courant, une telle transformation étant une transformation directe inverse. Cette transformation est l'opération inverse de la transformation effectuée à la sous-étape C61a) de la **figure 1A**. A l'issue de la sous-étape D63a), est obtenu un bloc résidu décodé courant $BDr_u$.

La sous-étape D63a) est mise en œuvre par un processeur ou module logiciel $Mr^1\_DO1$ de transformation inverse, tel que représenté sur la **figure 3A**, lequel est piloté par le microprocesseur $\mu P$ de l'unité de traitement UT_DO1.

Le processeur $Mr^1\_DO1$ est apte à mettre en œuvre une transformation directe inverse telle que par exemple une transformation inverse en cosinus discrètes de type $DCT^{-1}$, une transformation inverse en sinus discrètes de type $DST^{-1}$, une transformation inverse en ondelettes discrètes de type $DWT^{-1}$.

Au cours d'une étape D7a) représentée à la **figure 4A**, il est procédé à la reconstruction du bloc courant $B_u$ en ajoutant au bloc résidu décodé $BDr_u$, obtenu à l'issue de la sous-étape D63a), le bloc prédicteur $BP_{opt}$ qui a été obtenu à l'issue de l'étape D4 précitée. A l'issue de l'étape D7a), un bloc décodé courant $BD_u$ est obtenu.

L'étape D7a) est mise en œuvre par un processeur ou module logiciel CAL2_DO1 représenté sur la **figure 3A**, lequel est piloté par le microprocesseur $\mu P$ de l'unité de traitement UT_DO1.

Dans le cas où le premier type de prédiction qui a été appliqué au codage est Inter, conformément à l'invention, il est procédé, au cours d'une étape D6b) représentée à la **figure 4A**, à la sélection d'un mode de prédiction inverse associé à une prédiction inverse d'un deuxième type, différent dudit premier type de prédiction inverse précité. Selon un mode préféré de réalisation, la prédiction inverse du deuxième type est une prédiction Intra qui est, de façon connue en soi, associée à une pluralité de modes de prédiction définis chacun par une direction de prédiction prédéterminée. Dans le cas de la prédiction Intra proposée par exemple dans le standard HEVC, il existe trente-cinq directions de prédiction possibles, ce qui revient à déterminer trente-cinq blocs prédicteurs candidats disponibles pour la prédiction du bloc courant $B_u$. Selon l'invention, l'étape D6b) consiste à sélectionner parmi les blocs prédicteurs candidats disponibles, le prédicteur candidat qui minimise la distorsion entre le bloc prédicteur optimal $BP_{opt}$ qui a été obtenu à l'issue de l'étape D4 précitée de prédiction inverse d'un premier type et chacun desdits blocs prédicteurs candidats disponibles. De la même façon que dans le cas de la prédiction inverse du premier type précitée, chacun des blocs prédicteurs candidats mis en compétition au cours de l'étape D6b) est un bloc de pixels qui a déjà été décodé. De tels blocs prédicteurs sont préalablement stockés dans la mémoire tampon TAMP_DO1 du décodeur DO1, telle que représentée à la **figure 3A.**

A l'issue de l'étape D6b), un bloc prédicteur optimal $BP'_{opt}$ est obtenu. Un tel bloc prédicteur optimal $BP'_{opt}$ est alors associé à son mode de prédiction inverse optimal $MP'^{-1}_{opt}$ qui représente le mode de prédiction inverse d'un deuxième type sélectionné selon l'invention.

L'étape D6b) est mise en œuvre par un processeur ou module logiciel de calcul CAL3_DO1 tel que représenté sur la **figure 3A**, lequel est piloté par le microprocesseur $\mu P$ de l'unité de traitement UT_DO1.

Au cours d'une étape D7b) représentée à la **figure 4A**, conformément à l'invention, il est procédé à un décodage des données du bloc résidu quantifié $Bq_u$ à l'aide d'au moins un paramètre de décodage déterminé à partir du mode de prédiction inverse sélectionné à l'étape D6b).

Au cours de l'étape D7b), il est procédé, au cours d'une sous-étape D71b) représentée à la **figure 4A**, à un décodage de l'ensemble de coefficients quantifiés $Bq_u$ courant.

Un tel décodage est par exemple un décodage entropique de type CABAC ou bien encore un décodage entropique de type arithmétique ou de Huffman.

A l'issue de la sous-étape D71b) précitée, est obtenu un ensemble $BDq_u$ d'informations numériques associées à l'ensemble de coefficients quantifiés $Bq_u$ courant.

Selon un mode de réalisation de l'invention, l'opération de décodage entropique D71b) est choisie comme étant une opération de décodage spécifique au mode de prédiction inverse sélectionné à l'étape D6b). En d'autres termes, les probabilités utilisées pour le décodage des coefficients du bloc $Bq_u$ dépendent du mode de prédiction sélectionné à l'étape D6b). Par exemple, si le mode de prédiction inverse Intra sélectionné permet d'obtenir un bloc résidu décodé $BDr_u$ de faible amplitude, la probabilité d'apparition de coefficients à faible amplitude est augmentée. A l'inverse, si le mode de prédiction inverse Intra sélectionné permet d'obtenir un bloc résidu décodé $BDr_u$ d'amplitude élevée, la probabilité d'apparition de coefficients à faible amplitude est diminuée.

Une telle sous-étape D71b) de décodage est mise en œuvre par le module de décodage entropique MD_DO1 représenté sur la **figure 3A.**

Au cours de l'étape D7b), il est procédé, au cours d'une sous-étape D72b) représentée à la **figure 4A**, à une déquantification des informations numériques obtenues à la suite de la sous-étape D71b), selon une opération classique de déquantification qui est l'opération inverse de la quantification mise en œuvre lors de la sous-étape de quantification C72b) de la **figure 1A.** Un ensemble de coefficients déquantifiés $BDt_u$ courant est alors obtenu à l'issue de la sous-étape D72b). Une telle étape de déquantification est par exemple de type scalaire ou vectoriel.

Selon un mode de réalisation de l'invention, alternativement au décodage entropique effectué à la sous-étape D71b) ou en combinaison avec ce décodage entropique, l'opération de déquantification est choisie comme étant une déquantification spécifique au mode de prédiction sélectionné à l'étape D6b). Selon un premier exemple, si le mode de prédiction inverse Intra sélectionné est le mode 0, 1 ou 26 du standard HEVC, c'est le pas de quantification inverse propre au standard HEVC qui est choisi comme étant le plus adapté à ce mode. Selon un deuxième exemple, si le mode de prédiction inverse Intra sélectionné est l'un des modes 2 à 25, 27 à 34 du standard HEVC, le pas de quantification inverse le plus adapté à ce mode est le double du pas de quantification inverse propre au standard HEVC. Une telle disposition permet d'adapter la déquantification à l'énergie spécifique du bloc décodé $BD_u$ calculé à partir du bloc prédicteur $BP_{opt}$ obtenu à l'étape D4.

La sous-étape D72b) est effectuée au moyen du processeur ou module logiciel de quantification $MQ^{-1}\_DO1$ représenté à la **figure 3A.**

Au cours de l'étape D7b), il est procédé, au cours d'une sous-étape D73b) représentée à la **figure 4A**, à une transformation de l'ensemble de coefficients déquantifiés $BDt_u$ courant, une telle transformation étant une transformation directe inverse. Cette transformation est l'opération inverse de la transformation effectuée à la sous-étape C71b) de la **figure 1A**. A l'issue de la sous-étape D73b), est obtenu un bloc résidu décodé courant $BDr_u$.

La sous-étape D73b) est mise en œuvre par le processeur ou module logiciel $Mr^1\_DO1$ de transformation inverse, tel que représenté sur la **figure 3A.**

Selon un mode de réalisation de l'invention, alternativement à la sélection du décodage entropique effectué à la sous-étape D71b) et/ou à la sélection de la quantification inverse effectuée à la sous-étape D72b), ou bien en combinaison avec l'une et/ou l'autre de ces sélections, l'opération de transformation inverse directe est choisie comme étant une transformation inverse spécifique au mode de prédiction d'un deuxième type sélectionné à l'étape D6b). Selon un premier exemple, si le mode de prédiction inverse Intra sélectionné est le mode 0 ou 1 du standard HEVC, la transformation directe inverse la plus adaptée à ce mode étant la transformation $DST^{-1}$, c'est cette dernière qui est choisie. Selon un deuxième exemple, si le mode de prédiction inverse Intra sélectionné est l'un des modes 2 à 34 du standard HEVC, la transformation directe inverse la plus adaptée à ce mode étant la transformation $DCT^{-1}$, c'est cette dernière qui est choisie.

Au cours d'une étape D8b) représentée à la **figure 4A**, il est procédé à la reconstruction du bloc courant $B_u$ en ajoutant au bloc résidu décodé $BDr_u$, obtenu à l'issue de la sous-étape D73b), le bloc prédicteur $BP_{opt}$ qui a été obtenu à l'issue de l'étape D4 précitée. A l'issue de l'étape D8b), un bloc décodé courant $BD_u$ est obtenu.

L'étape D8b) est mise en œuvre par le processeur ou module logiciel $CAL2\_DO1$ représenté sur la **figure 3A.**

Au cours d'une étape D9 représentée à la **figure 4A**, ledit bloc décodé $BD_u$ est écrit dans une image décodée $ID_j$.

Une telle étape est mise en oeuvre par un processeur ou module logiciel URI1 de reconstruction d'image tel que représenté sur la **figure 3A**, ledit module étant piloté par le microprocesseur $\mu P$ du module de traitement $UT\_DO1$.

Les étapes de décodage qui viennent d'être décrites ci-dessus sont mises en œuvre pour tous les blocs $B_1$, $B_2$, ..., $B_u$,..., $B_S$ à décoder de l'image courante $IC_j$ considérée, dans un ordre prédéterminé qui est par exemple l'ordre lexicographique.

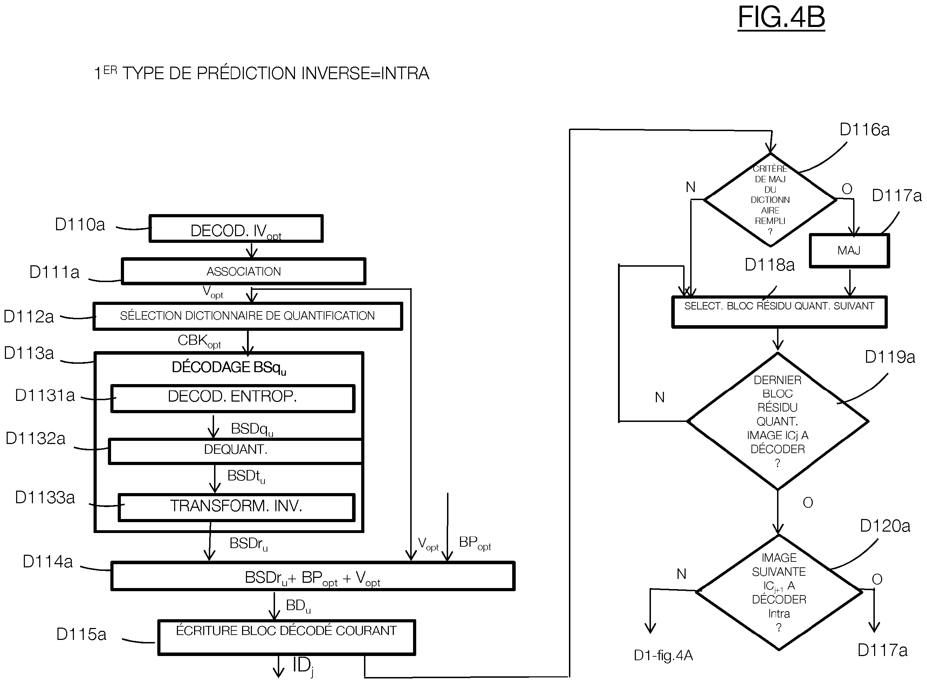

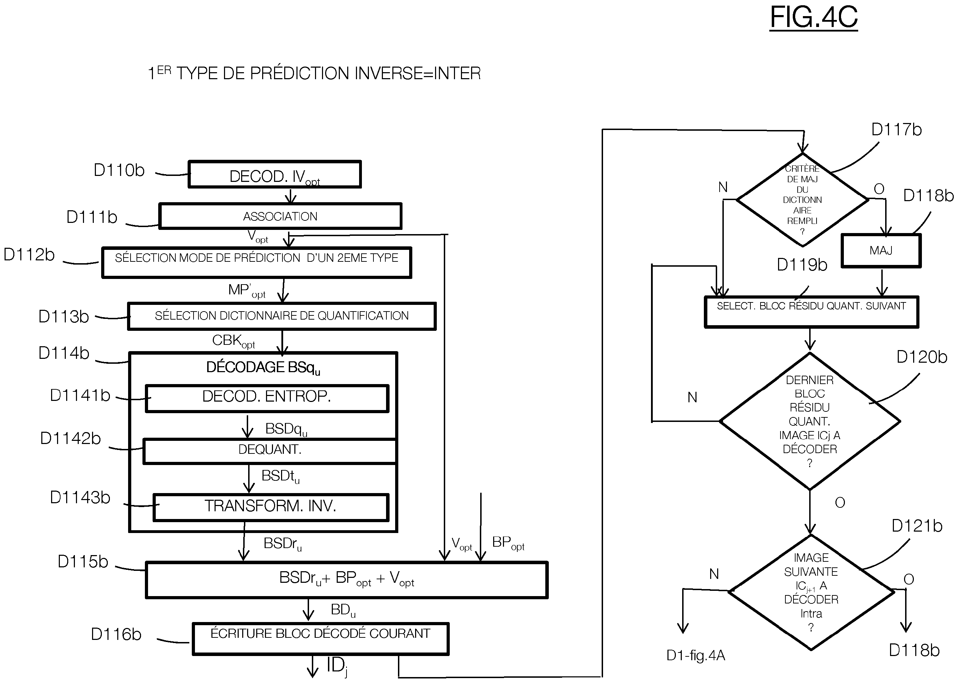

Un deuxième mode de réalisation de l'invention va maintenant être décrit en référence aux **figures 3B, 4B** et **4C**.

Dans ce deuxième mode de réalisation, chaque bloc à décoder est soumis à un décodage par quantification scalaire, comme cela a été décrit en référence à la **figure 3A**, qui est avantageusement combiné à un décodage par quantification vectorielle.

Selon le deuxième mode de réalisation, le procédé de décodage selon l'invention est implémenté dans un dispositif de décodage ou décodeur DO2 représenté à la **figure 3B.** Comme illustré en **figure 3B**, un tel dispositif de décodage comprend une mémoire MEM_DO2 comprenant une mémoire tampon TAMP_DO2, une unité de traitement UT_DO2 équipée par exemple d'un microprocesseur $\mu P$ et pilotée par un programme d'ordinateur PG_DO2 qui met en œuvre le procédé de décodage selon l'invention. A l'initialisation, les instructions de code du programme d'ordinateur PG_DO2 sont par exemple chargées dans une mémoire RAM, notée RAM_DO2, avant d'être exécutées par le processeur de l'unité de traitement UT_DO2.

En outre, le décodeur DO2 comprend des processeurs ou modules logiciels MI_DO2, $PRED^{-1}\_DO2$, CAL1_DO2, CAL3_DO2, qui sont respectivement identiques aux processeurs ou modules logiciels MI_DO1, $PRED^{-1}\_DO1$, CAL1_DO1, CAL3_DO1 du décodeur DO1 représenté sur la **figure 3A.** Pour cette raison, les processeurs ou modules logiciels MI_DO2, $PRED^{-1}\_DO2$, CAL1_DO2, CAL3_DO2 ne seront pas à nouveau décrits en détail.

La **figure 4B** décrit plus précisément comment la quantification inverse vectorielle est mise en œuvre lorsqu'il a été vérifié, à l'issue de l'étape D5 de la **figure 4A**, que le premier type de prédiction inverse est Intra.

En référence à la **figure 4B**, au cours d'une étape D110a), il est procédé à un décodage de l'indice $IV_{opt}$ du vecteur de quantification optimal $V_{opt}$ qui a été sélectionné à l'issue de l'étape C611a) de la **figure 1B.**

Une telle étape D110a) de décodage est mise en œuvre par le module de décodage DB_DO2 de la **figure 3B.**

Au cours d'une étape D111a) représentée à la **figure 4B**, il est procédé à la détermination du vecteur de quantification optimal $V_{opt}$ associé à l'indice $IV_{opt}$ décodé.

L'étape D111a) est mise en œuvre par un processeur ou module logiciel de calcul CAL4_DO2 tel que représenté sur la **figure 3B**, lequel est piloté par le microprocesseur $\mu$P de l'unité de traitement UT_DO2.

Au cours d'une étape D112a) représentée à la **figure 4B**, il est procédé à la sélection d'un dictionnaire de vecteurs de quantification, noté $CBK_{opt}$, qui contient le vecteur de quantification $V_{opt}$ déterminé à l'étape D111a). Un tel dictionnaire appartient à une pluralité de dictionnaires de vecteurs de quantification disponibles, notés $CBK_1$, $CBK_2$,..., $CBK_W$. De tels dictionnaires sont préalablement stockés dans la mémoire tampon TAMP_DO2 du décodeur DO2, telle que représentée à la **figure 3B.**

L'étape D112a) est mise en œuvre par un processeur ou module logiciel de calcul CAL5_DO2 tel que représenté sur la **figure 3B**, lequel est piloté par le microprocesseur $\mu$P de l'unité de traitement UT_DO2.

Conformément à l'invention, de façon correspondante à l'étape de codage C110a) de la **figure 1B**, une telle sélection est mise en œuvre en fonction de l'un et/ou de l'autre des éléments suivants:

- les caractéristiques de la prédiction (par exemple, le mode Intra choisi parmi les 35 modes Intra du standard HEVC), dont les indices ont été décodés à l'étape D3,
- les caractéristiques fréquentielles du bloc prédicteur $BP_{opt}$ dont l'indice $IB_{opt}$ a été décodé à l'étape D3,
- la taille du bloc courant $B_u$ à décoder,
- des caractéristiques de l'image courante $IC_j$ à décoder, comme sa taille ou son énergie.

Dans le mode préféré de réalisation, W=70, c'est-à-dire que :

- dans le cas d'un bloc courant $B_u$ de taille 4x4, il existe un dictionnaire différent pour chacun des 35 modes Intra considérés dans le standard HEVC,
- dans le cas d'un bloc courant $B_u$ de taille 8x8, il existe un dictionnaire différent pour chacun des 35 modes Intra considérés dans le standard HEVC.

Conformément à ce mode préféré de réalisation, le dictionnaire sélectionné dépend donc à la fois de la taille du bloc courant $B_u$ à décoder et du mode de prédiction dont l'indice a été décodé à l'étape D3.

Au cours d'une étape D113a) représentée à la **figure 4B**, il est procédé, conformément au deuxième mode de réalisation de l'invention, à un décodage des données du bloc résidu quantifié $BSq_u$.

Au cours de l'étape D113a), il est procédé, au cours d'une sous-étape D1131a) représentée à la **figure 4B**, à un décodage de l'ensemble de coefficients quantifiés $BSq_u$ courant.

Un tel décodage est par exemple un décodage entropique de type CABAC ou bien encore un décodage entropique de type arithmétique ou de Huffman.

A l'issue de la sous-étape D1131a) précitée, est obtenu un ensemble $BSDq_u$ d'informations numériques associées à l'ensemble de coefficients quantifiés $BSq_u$ courant.

Une telle sous-étape D1131a) de décodage est mise en œuvre par un module de décodage entropique MD_DO2 représenté sur la **figure 3B**, lequel est piloté par le microprocesseur $\mu$P de l'unité de traitement UT_DO2.

Au cours de l'étape D113a), il est procédé, au cours d'une sous-étape D1132a) représentée à la **figure 4B**, à une déquantification des informations numériques obtenues à la suite de la sous-étape D1131a), selon une opération classique de déquantification qui est l'opération inverse de la quantification mise en œuvre lors de la sous-étape de quantification C1142a) de la **figure 1B.** Un ensemble de coefficients déquantifiés $BSDt_u$ courant est alors obtenu à l'issue de la sous-étape D1132a). Une telle sous-étape de déquantification est par exemple de type scalaire ou vectoriel.

La sous-étape D1132a) est effectuée au moyen d'un processeur ou module logiciel de quantification $MQ^{-1}$_DO2 représenté à la **figure 3B**, lequel est piloté par le microprocesseur $\mu$P de l'unité de traitement UT_DO2.

Au cours de l'étape D113a), il est procédé, au cours d'une sous-étape D1133a) représentée à la **figure 4B**, à une transformation de l'ensemble de coefficients déquantifiés $BSDt_u$ courant, une telle transformation étant une transformation directe inverse. Cette transformation est l'opération inverse de la transformation effectuée à la sous-étape C1141a) de la **figure 1B**. A l'issue de la sous-étape D1133a), est obtenu un bloc résidu décodé courant $BSDr_u$.

La sous-étape D1133a) est mise en œuvre par un processeur ou module logiciel $MT^{-1}$_DO2 de transformation inverse, tel que représenté sur la **figure 3B**, lequel est piloté par le microprocesseur $\mu$P de l'unité de traitement UT_DO2.

Le processeur $MT^{-1}$_DO2 est apte à mettre en œuvre une transformation directe inverse telle que par exemple une transformation inverse en cosinus discrètes de type $DCT^{-1}$, une transformation inverse en sinus discrètes de type $DST^{-1}$, une transformation inverse en ondelettes discrètes de type $DWT^{-1}$.

Au cours d'une étape D114a) représentée à la **figure 4B**, il est procédé, conformément à l'invention, à la reconstruction du bloc courant $B_u$ en ajoutant au bloc résidu décodé $BSDr_u$, obtenu à l'issue de la sous-étape D1133a) :

- le bloc prédicteur optimal $BP_{opt}$ qui a été obtenu à l'issue de l'étape D4 précitée de la **figure 4A**,
- et le vecteur de quantification optimal $V_{opt}$ qui a été obtenu à l'issue de l'étape D111a) précitée de la **figure 4B**.

A l'issue de l'étape D114a), un bloc décodé courant $BD_u$ est obtenu.

L'étape D114a) est mise en œuvre par un processeur ou module logiciel de calcul CAL2_DO2 représenté sur la **figure 3B**, lequel est piloté par le microprocesseur $\mu P$ de l'unité de traitement UT_DO2.

Au cours d'une étape D115a) représentée à la **figure 4B**, ledit bloc décodé $BD_u$ est écrit dans une image décodée $ID_j$.

Une telle étape est mise en oeuvre par un processeur ou module logiciel URI2 de reconstruction d'image tel que représenté sur la **figure 3B**, ledit module étant piloté par le microprocesseur $\mu P$ du module de traitement UT_DO2.

Au cours d'une étape D116a) représentée à la **figure 4B**, il est procédé à un test qui consiste à vérifier si un critère de mise à jour des dictionnaires $CBK_1$, $CBK_2$,..., $CBK_W$ est rempli ou non.

Selon une première variante, un tel critère consiste à comparer le nombre de coefficients non nuls dans le bloc résidu décodé $BSDr_u$ à un seuil prédéterminé. Par exemple, le critère de mise à jour est considéré rempli si le nombre de coefficients non nuls est supérieur à 3.

Selon une deuxième variante, un tel critère consiste à comparer le débit du codage du bloc résidu décodé $BSDr_u$ à un seuil prédéterminé. Par exemple, le critère de mise à jour est considéré rempli si le débit du codage du bloc résidu décodé $BSDr_u$ est supérieur à 10 bits.

L'étape D116a) est mise en oeuvre par un processeur ou module logiciel de calcul CAL7_DO2 tel que représenté sur la **figure 3B**, lequel est piloté par le microprocesseur $\mu P$ de l'unité de traitement UT_DO2.

Si le critère de mise à jour est rempli, au cours d'une étape D117a) représentée à la **figure 4B**, il est procédé à une mise à jour d'au moins un des dictionnaires $CBK_1$, $CBK_2$,..., $CBK_W$.

L'étape D117a) est mise en œuvre par un processeur ou module logiciel de calcul CAL8_DO2 tel que représenté sur la **figure 3B**, lequel est piloté par le microprocesseur $\mu P$ de l'unité de traitement UT_DO2.

L'étape D117a) étant identique à l'étape C117a) de mise à jour des dictionnaires telle que mise en œuvre au codage en référence à la **figure 1B**, cette étape ne sera pas décrite plus longuement.

A la suite de l'étape D117a) précitée, il est procédé, au cours d'une étape D118a) représentée sur la **figure 4B**, à la sélection du bloc résidu quantifié suivant de l'image courante $IC_j$ à décoder. Puis les étapes de décodage du bloc résidu quantifié suivant décrites ci-dessus sont à nouveau mises en œuvre.

Si à l'issue de l'étape D116a) précitée, le critère de mise à jour n'est pas rempli, il est procédé, au cours de l'étape D118a) précitée, à la sélection du bloc résidu quantifié suivant de l'image courante $IC_j$ à décoder. Puis les étapes de décodage du bloc résidu quantifié suivant décrites ci-dessus en référence à la **figure 4B** sont à nouveau mises en œuvre.

Au cours d'une étape D119a) représentée à la **figure 4B**, le décodeur DO2 de la **figure 3B** teste si le bloc courant qui a été décodé conformément au procédé de décodage décrit ci-dessus est le dernier bloc de l'image courante $IC_j$ à décoder.

Si tel n'est pas le cas, l'étape D118a) précitée est mise en œuvre.

Si le bloc courant est le dernier bloc de l'image courante $IC_j$ à décoder, au cours d'une étape D120a) représentée à la **figure 4B**, le décodeur DO2 de la **figure 3B** teste si l'image courante suivante $IC_{j+1}$ à décoder est une image de type Intra ou non.

Dans le cas où l'image courante suivante $IC_{j+1}$ à décoder est de type Intra, avant de procéder au décodage des blocs de cette image conformément au procédé de décodage de la **figure 4A** et éventuellement au décodage par quantification vectorielle inverse des **figures 4B** et **4C**, l'étape D117a) de mise à jour des dictionnaires est mise en œuvre.

Dans l'exemple représenté, les vecteurs de quantification du dictionnaire $CBK_{opt}$ sont chacun initialisés à une valeur respective prédéterminée.

Dans le cas où l'image courante suivante $IC_{j+1}$ à décoder n'est pas de type Intra, il est procédé directement au décodage des blocs de cette image conformément au procédé de décodage de la **figure 4A** et éventuellement au décodage par quantification vectorielle inverse des **figures 4B** et **4C**.

Les étapes de décodage qui viennent d'être décrites ci-dessus sont mises en œuvre pour tous les blocs $B_1$, $B_2$, ..., $B_u$,..., $B_S$ à décoder de l'image courante $IC_j$ considérée, dans un ordre prédéterminé qui est par exemple l'ordre lexicographique.

La **figure 4C** décrit plus précisément comment la quantification inverse vectorielle est mise en œuvre lorsqu'il a été vérifié, à l'issue de l'étape D5 de la **figure 4A**, que le premier type de prédiction inverse est Inter.

En référence à la **figure 4C**, au cours d'une étape D110b), il est procédé à un décodage de l'indice $IV_{opt}$ du vecteur de quantification optimal $V_{opt}$ qui a été sélectionné à l'issue de l'étape C612b) de la **figure 1C**.

Une telle étape D110b) de décodage est mise en œuvre par le module de décodage DB_DO2 de la **figure 3B**.

Au cours d'une étape D111b) représentée à la **figure 4C**, il est procédé à la détermination du vecteur de quantification optimal $V_{opt}$ associé à l'indice $IV_{opt}$ décodé.

L'étape D111 b) est mise en œuvre par le processeur ou module logiciel de calcul CAL4_DO2 de la **figure 3B**.

Au cours d'une étape D112b) représentée à la **figure 4C**, il est procédé à la sélection d'un mode de prédiction optimal MP'$_{opt}$ qui représente le mode de prédiction inverse d'un deuxième type sélectionné selon l'invention. Comme déjà décrit précédemment en ce qui concerne le deuxième mode de réalisation du codage de la **figure 1C**, l'étape D112b) consiste à sélectionner parmi les blocs prédicteurs candidats disponibles, le prédicteur candidat qui minimise la distorsion entre le bloc prédicteur optimal BP$_{opt}$ qui a été obtenu à l'issue de l'étape D4 précitée de prédiction inverse d'un premier type et chacun desdits blocs prédicteurs candidats disponibles. De la même façon que dans le cas de la prédiction du premier type précitée, chacun des blocs prédicteurs candidats mis en compétition au cours de l'étape D112b) est un bloc de pixels qui a été déjà décodé. De tels blocs prédicteurs sont préalablement stockés dans la mémoire tampon TAMP_DO2 du décodeur DO2 de la **figure 3B**.

A l'issue de l'étape D112b), un bloc prédicteur optimal BP'$_{opt}$ est obtenu. Un tel bloc prédicteur optimal BP'$_{opt}$ est alors associé à son mode de prédiction optimal MP'$_{opt}$ qui représente le mode de prédiction inverse d'un deuxième type sélectionné selon l'invention.

L'étape D112b) est mise en œuvre par un processeur ou module logiciel de calcul CAL3_DO2 tel que représenté sur la **figure 3B**, lequel est piloté par le microprocesseur µP de l'unité de traitement UT_DO2.

Au cours d'une étape D113b) représentée à la **figure 4C**, il est procédé à la sélection d'un dictionnaire de vecteurs de quantification CBK$_{opt}$ qui appartient à un ou plusieurs dictionnaires de vecteurs de quantification disponibles au codeur, notés CBK$_1$, CBK$_2$,..., CBK$_W$. De tels dictionnaires sont préalablement stockés dans la mémoire tampon TAMP_DO2 du décodeur DO2, telle que représentée à la **figure 3B**.

Conformément au deuxième mode de réalisation de l'invention, le dictionnaire CBK$_{opt}$ sélectionné est celui qui est associé au mode de prédiction optimal MP'$_{opt}$ qui a été sélectionné à l'étape D112b).

L'étape D113b) est mise en œuvre par le processeur ou module logiciel de calcul CAL5_DO2 de la **figure 3B**.

Au cours d'une étape D114b) représentée à la **figure 4C**, il est procédé, conformément au deuxième mode de réalisation de l'invention, à un décodage des données du bloc résidu quantifié BSq$_u$.

Au cours de l'étape D114b), il est procédé, au cours d'une sous-étape D1141b) représentée à la **figure 4C**, à un décodage de l'ensemble de coefficients quantifiés BSq$_u$ courant.

Un tel décodage est par exemple un décodage entropique de type CABAC ou bien encore un décodage entropique de type arithmétique ou de Huffman.

A l'issue de la sous-étape D1141b) précitée, est obtenu un ensemble BSDq$_u$ d'informations numériques associées à l'ensemble de coefficients quantifiés BSq$_u$ courant.

Une telle sous-étape D1141b) de décodage est mise en œuvre par le module de décodage entropique MD_DO2 de la **figure 3B**.

Au cours de l'étape D114b), il est procédé, au cours d'une sous-étape D1142b) représentée à la **figure 4C**, à une déquantification des informations numériques obtenues à la suite de la sous-étape D1141b), selon une opération classique de déquantification qui est l'opération inverse de la quantification mise en œuvre lors de la sous-étape de quantification C1152b) de la **figure 1C**. Un ensemble de coefficients déquantifiés BSDt$_u$ courant est alors obtenu à l'issue de la sous-étape D1142b). Une telle sous-étape de déquantification est par exemple de type scalaire ou vectoriel.

La sous-étape D1142b) est effectuée au moyen du processeur ou module logiciel de quantification MQ$^{-1}$_DO2 de la **figure 3B**.

Au cours de l'étape D114b), il est procédé, au cours d'une sous-étape D1143b) représentée à la **figure 4C**, à une transformation de l'ensemble de coefficients déquantifiés BSDt$_u$ courant, une telle transformation étant une transformation directe inverse. Cette transformation est l'opération inverse de la transformation effectuée à la sous-étape C1151b) de la **figure 1C**. A l'issue de la sous-étape D1143b), est obtenu un bloc résidu décodé courant BSDr$_u$.

La sous-étape D1143b) est mise en œuvre par le processeur ou module logiciel MT$^{-1}$_DO2 de transformation inverse de la **figure 3B**.

Au cours d'une étape D115b) représentée à la **figure 4C**, il est procédé, conformément à l'invention, à la reconstruction du bloc courant B$_u$ en ajoutant au bloc résidu décodé BSDr$_u$, obtenu à l'issue de la sous-étape D1143b) :

- le bloc prédicteur optimal BP$_{opt}$ qui a été obtenu à l'issue de l'étape D4 précitée de la **figure 4A**,
- et le vecteur de quantification optimal V$_{opt}$ qui a été obtenu à l'issue de l'étape D111b) précitée de la **figure 4C**.

A l'issue de l'étape D115b), un bloc décodé courant BD$_u$ est obtenu. L'étape D115b) est mise en œuvre par le processeur ou module logiciel de calcul CAL2_DO2 de la **figure 3B**.

Au cours d'une étape D116b) représentée à la **figure 4C**, ledit bloc décodé BD$_u$ est écrit dans une image décodée ID$_j$.

Une telle étape est mise en œuvre par le processeur ou module logiciel URI2 de reconstruction d'image de la **figure 3B**.

Au cours d'une étape D117b) représentée à la **figure 4C**, il est procédé à un test qui consiste à vérifier si un critère de mise à jour des dictionnaires $CBK_1$, $CBK_2$,..., $CBK_W$ est rempli ou non.

L'étape D117b) étant identique à l'étape D116a) de mise à jour des dictionnaires de la **figure 4B**, cette étape ne sera pas décrite plus longuement.

L'étape D117b) est mise en œuvre par le processeur ou module logiciel de calcul CAL7_DO2 de la **figure 3B**.

Si le critère de mise à jour est rempli, au cours d'une étape D118b) représentée à la **figure 4C**, il est procédé à une mise à jour d'au moins un des dictionnaires $CBK_1$, $CBK_2$,..., $CBK_W$.

L'étape D118b) est mise en œuvre par le processeur ou module logiciel de calcul CAL8_DO2 de la **figure 3B**.

L'étape D118b) étant identique à l'étape D117a) de mise à jour des dictionnaires de la **figure 4B**, cette étape ne sera pas décrite plus longuement.

A la suite de l'étape D118b) précitée, il est procédé, au cours d'une étape D119b) représentée sur la **figure 4C**, à la sélection du bloc résidu quantifié suivant de l'image courante $IC_j$ à décoder. Puis les étapes de décodage du bloc résidu quantifié suivant décrites ci-dessus sont à nouveau mises en œuvre.

Si à l'issue de l'étape D117b) précitée, le critère de mise à jour n'est pas rempli, il est procédé, au cours de l'étape D119b) précitée, à la sélection du bloc résidu quantifié suivant de l'image courante $IC_j$ à décoder. Puis les étapes de décodage du bloc résidu quantifié suivant décrites ci-dessus en référence à la **figure 4C** sont à nouveau mises en œuvre.

Au cours d'une étape D120b) représentée à la **figure 4C**, le décodeur DO2 de la **figure 3B** teste si le bloc courant qui a été décodé conformément au procédé de décodage décrit ci-dessus est le dernier bloc de l'image courante $IC_j$ à décoder.

Si tel n'est pas le cas, l'étape D119b) précitée est mise en œuvre.

Si le bloc courant est le dernier bloc de l'image courante $IC_j$ à décoder, au cours d'une étape D121b) représentée à la **figure 4C**, le décodeur DO2 de la **figure 3B** teste si l'image courante suivante $IC_{j+1}$ à décoder est une image de type Intra ou non.

Dans le cas où l'image courante suivante $IC_{j+1}$ à décoder est de type Intra, avant de procéder au décodage des blocs de cette image conformément au procédé de décodage de la **figure 4A** et éventuellement au décodage par quantification vectorielle inverse des **figures 4B** et **4C**, l'étape D118b) de mise à jour des dictionnaires est mise en œuvre.

Dans l'exemple représenté, les vecteurs de quantification du dictionnaire $CBK_{opt}$ sont chacun initialisés à une valeur respective prédéterminée.

Dans le cas où l'image courante suivante $IC_{j+1}$ à décoder n'est pas de type Intra, il est procédé directement au décodage des blocs de cette image conformément au procédé de décodage de la **figure 4A** et éventuellement au décodage par quantification vectorielle inverse des **figures 4B** et **4C**.

Les étapes de décodage qui viennent d'être décrites ci-dessus sont mises en œuvre pour tous les blocs $B_1$, $B_2$, ..., $B_u$,..., $B_S$ à décoder de l'image courante $IC_j$ considérée, dans un ordre prédéterminé qui est par exemple l'ordre lexicographique.

Il va de soi que les modes de réalisation qui ont été décrits ci-dessus ont été donnés à titre purement indicatif et nullement limitatif. L'invention est définie par les revendications annexées.

## Revendications

**1.** Procédé de codage d'au moins une image ($IC_j$) découpée en blocs, mettant en œuvre, pour un bloc courant ($B_u$) à coder :

- une détermination (C31) d'un premier type de prédiction, Inter, du bloc courant,
- une détermination (C32) d'un mode de prédiction associé au premier type de prédiction,
- une obtention d'un premier bloc prédicteur ($BP_{opt}$) à partir du mode de prédiction déterminé,
- un calcul (C5a) ; (C5b) d'un bloc résidu ($Br_u$) qui est représentatif de la différence entre le premier bloc prédicteur obtenu ($BP_{opt}$) et le bloc courant ($B_u$), ledit procédé de codage étant **caractérisé en ce qu'**il comprend:
- une sélection (C6b) d'un mode de prédiction associé à une prédiction d'un deuxième type, Intra, différent dudit premier type,
- un codage (C7b) du bloc résidu ($Br_u$) à l'aide d'un paramètre de codage déterminé à partir du mode de prédiction sélectionné,

dans lequel la sélection du mode de prédiction est mise en œuvre en fonction du premier bloc prédicteur ($BP_{opt}$) obtenu à partir du mode de prédiction associé au premier type de prédiction,
dans lequel le mode de prédiction sélectionné est celui à partir duquel est obtenu un deuxième bloc prédicteur qui, parmi d'autres blocs prédicteurs candidats, a la distorsion minimale par rapport au premier bloc prédicteur (BPopt),
dans lequel le paramètre de codage appartient au groupe comprenant :

- une opération de transformée,
- un dictionnaire de vecteurs de quantification,
- un codeur entropique,
- une opération de quantification scalaire.

2. Dispositif de codage (CO1) d'au moins une image (IC$_j$) découpée en blocs, comprenant, pour un bloc courant (B$_u$) à coder :

- des moyens (PRED_CO1) de prédiction pour déterminer:

   • un premier type de prédiction, Inter, du bloc courant,
   • un mode de prédiction associé au premier type de prédiction,

lesdits moyens de prédiction étant configurés pour obtenir un premier bloc prédicteur (BP$_{opt}$) à partir du mode de prédiction déterminé,
- des moyens (CAL2_CO1) de calcul d'un bloc résidu (Br$_u$) qui est représentatif de la différence entre le premier bloc prédicteur obtenu (BP$_{opt}$) et le bloc courant (Bu),

ledit dispositif de codage étant **caractérisé en ce qu'**il comprend:

- des moyens (CAL3_CO1) de sélection d'un mode de prédiction associé à une prédiction d'un deuxième type, Intra, différent dudit premier type,
- des moyens (MT_CO1, MQ_CO1, MC_CO1) de codage du bloc résidu (Br$_u$) calculé à l'aide d'un paramètre de codage déterminé à partir du mode de prédiction sélectionné,

dans lequel le mode de prédiction est sélectionné en fonction du premier bloc prédicteur (BP$_{opt}$) obtenu à partir du mode de prédiction associé au premier type de prédiction,
dans lequel le mode de prédiction sélectionné est celui à partir duquel est obtenu un deuxième bloc prédicteur qui, parmi d'autres blocs prédicteurs candidats, a la distorsion minimale par rapport au premier bloc prédicteur (BPopt),
dans lequel le paramètre de codage appartient au groupe comprenant :

- une opération de transformée,
- un dictionnaire de vecteurs de quantification,
- un codeur entropique,
- une opération de quantification scalaire.

3. Programme d'ordinateur comportant des instructions de code de programme pour l'exécution des étapes du procédé de codage selon la revendication 1, lorsque ledit programme est exécuté sur un ordinateur.

4. Support d'enregistrement lisible par un ordinateur sur lequel est enregistré un programme d'ordinateur comprenant des instructions de code de programme pour l'exécution des étapes du procédé de codage selon la revendication 1, lorsque ledit programme est exécuté par un ordinateur.

5. Procédé de décodage d'un signal de données (F1) représentatif d'au moins une image (IC$_j$) découpée en blocs, mettant en œuvre, pour un bloc courant (Bu) à décoder :

- une détermination (D2), dans ledit signal de données, d'un bloc résidu (Br$_u$) relatif au bloc courant à décoder,
- une détermination (D31) d'un premier type de prédiction, Inter, du bloc courant,
- une détermination (D32) d'un mode de prédiction associé audit premier type de prédiction,
- une obtention (D4) d'un premier bloc prédicteur (BP$_{opt}$) à partir dudit mode de prédiction déterminé,

ledit procédé de décodage étant **caractérisé en ce qu'**il comprend:

- une sélection (D6b) d'un mode de prédiction associé à une prédiction d'un deuxième type Intra, différent dudit premier type,
- une reconstruction (D7b)-(D8b) du bloc courant à partir du bloc résidu (Br$_u$) déterminé, du premier bloc prédicteur (BP$_{opt}$) obtenu et d'un paramètre de décodage déterminé à partir du mode de prédiction sélectionné,
dans lequel la sélection du mode de prédiction est mise en œuvre en fonction du premier bloc prédicteur (BP$_{opt}$)

obtenu à partir du mode de prédiction associé au premier type de prédiction,

dans lequel le mode de prédiction sélectionné est celui à partir duquel est obtenu un deuxième bloc prédicteur qui, parmi d'autres blocs prédicteurs candidats, a la distorsion minimale par rapport au premier bloc ($BP_{opt}$),
dans lequel le paramètre de décodage appartient au groupe comprenant :

- une opération de transformée,
- un dictionnaire de vecteurs de quantification,
- un décodeur entropique,
- une opération de quantification scalaire.

6. Dispositif de décodage d'un signal de données (F1) représentatif d'au moins une image ($IC_j$) découpée en blocs, comprenant, pour un bloc courant ($B_u$) à décoder :

- des moyens (MI_DO1) de détermination, dans ledit signal de données, d'un bloc résidu ($Br_u$) relatif au bloc courant à décoder,
- des moyens ($PRED^{-1}$_DO1) de prédiction pour déterminer:

   • un premier type de prédiction, Inter, du bloc courant,
   • un mode de prédiction associé au premier type de prédiction,

lesdits moyens de prédiction étant configurés pour obtenir un premier bloc prédicteur ($BP_{opt}$) à partir du mode de prédiction déterminé,

ledit dispositif de décodage étant **caractérisé en ce qu'**il comprend:

- des moyens (CAL1_DO1) de sélection d'un mode de prédiction associé à une prédiction d'un deuxième type, Intra, différent dudit premier type,
- des moyens (MD_DO1, $MQ^{-1}$_DO1, $MT^{-1}$_DO1, CAL2_DO1) de reconstruction du bloc courant à partir du bloc résidu ($Br_u$) déterminé, du premier bloc prédicteur ($BP_{opt}$) obtenu et d'un paramètre de décodage déterminé à partir du mode de prédiction sélectionné,

dans lequel le mode de prédiction est sélectionné en fonction du premier bloc prédicteur ($BP_{opt}$) obtenu à partir du mode de prédiction associé au premier type de prédiction,
dans lequel le mode de prédiction sélectionné est celui à partir duquel est obtenu un deuxième bloc prédicteur qui, parmi d'autres blocs prédicteurs candidats, a la distorsion minimale par rapport au premier bloc prédicteur (BPopt),
dans lequel le paramètre de décodage appartient au groupe comprenant :

- une opération de transformée,
- un dictionnaire de vecteurs de quantification,
- un décodeur entropique,
- une opération de quantification scalaire.

7. Programme d'ordinateur comportant des instructions de code de programme pour l'exécution des étapes du procédé de décodage selon revendication 5, lorsque ledit programme est exécuté sur un ordinateur.

8. Support d'enregistrement lisible par un ordinateur sur lequel est enregistré un programme d'ordinateur comprenant des instructions de code de programme pour l'exécution des étapes du procédé de décodage selon revendication 5, lorsque ledit programme est exécuté par un ordinateur.

**Patentansprüche**

1. Verfahren zur Codierung mindestens eines in Blöcke unterteilten Bildes ($IC_j$), das für einen zu codierenden aktuellen Block ($B_u$) Folgendes implementiert:

- eine Bestimmung (C31) eines ersten Prädiktionstyps, Inter, des aktuellen Blocks,
- eine Bestimmung (C32) eines dem ersten Prädiktionstyp zugeordneten Prädiktionsmodus,

- ein Erhalten eines ersten Prädiktorblocks ($BP_{opt}$) ausgehend von dem bestimmten Prädiktionsmodus,
- eine Berechnung (C5a); (C5b) eines Restblocks ($Br_u$), der repräsentativ für die Differenz zwischen dem erhaltenen ersten Prädiktorblock ($BP_{opt}$) und dem aktuellen Block ($B_u$) ist,

wobei das Codierungsverfahren **dadurch gekennzeichnet ist, dass** es umfasst:

- ein Auswählen (C6b) eines Prädiktionsmodus, der einer Prädiktion eines zweiten Typs, Intra, zugeordnet ist, der vom ersten Typ verschieden ist,
- eine Codierung (C7b) des Restblocks ($Br_u$) mithilfe eines Codierungsparameters, der ausgehend von dem ausgewählten Prädiktionsmodus bestimmt wird,

wobei das Auswählen des Prädiktionsmodus in Abhängigkeit von dem ersten Prädiktorblock ($BP_{opt}$) implementiert wird, der ausgehend von dem dem ersten Prädiktionstyp zugeordneten Prädiktionsmodus erhalten wird,
wobei der ausgewählte Prädiktionsmodus derjenige ist, von dem ausgehend ein zweiter Prädiktorblock erhalten wird, der unter anderen Prädiktorblockkandidaten die minimale Verzerrung in Bezug auf den ersten Prädiktorblock ($BP_{opt}$) hat,
wobei der Codierungsparameter der Gruppe angehört, die umfasst:

- eine Transformationsoperation,
- ein Quantisierungsvektor-Dictionary,
- einen Entropiecodierer,
- eine skalare Quantisierungsoperation.

2. Vorrichtung zur Codierung (CO1) mindestens eines in Blöcke unterteilten Bildes ($IC_j$), die für einen zu codierenden aktuellen Block ($B_u$) Folgendes umfasst:

- Prädiktionsmittel (PRED_CO1), um zu bestimmen:

  • einen ersten Prädiktionstyp, Inter, des aktuellen Blocks,
  • einen dem ersten Prädiktionstyp zugeordneten Prädiktionsmodus,

wobei die Prädiktionsmittel dazu ausgestaltet sind, einen ersten Prädiktorblock ($BP_{opt}$) ausgehend von dem bestimmten Prädiktionsmodus zu erhalten,
- Rechenmittel (CAL2_CO1) zum Berechnen eines Restblocks ($Br_u$), der repräsentativ für die Differenz zwischen dem erhaltenen ersten Prädiktorblock ($BP_{opt}$) und dem aktuellen Block ($B_u$) ist,
wobei die Codierungsvorrichtung **dadurch gekennzeichnet ist, dass** sie umfasst:
- Auswählmittel (CAL3_CO1) zum Auswählen eines Prädiktionsmodus, der einer Prädiktion eines zweiten Typs, Intra, zugeordnet ist, der vom ersten Typ verschieden ist,
- Codiermittel (MT_CO1, MQ_CO1, MC_CO1) zum Codieren des Restblocks ($Br_u$), der mithilfe eines ausgehend von dem ausgewählten Prädiktionsmodus bestimmten Codierungsparameters berechnet wird,

wobei der Prädiktionsmodus in Abhängigkeit von dem ersten Prädiktorblock ($BP_{opt}$) ausgewählt wird, der ausgehend von dem dem ersten Prädiktionstyp zugeordneten Prädiktionsmodus erhalten wird,
wobei der ausgewählte Prädiktionsmodus derjenige ist, von dem ausgehend ein zweiter Prädiktorblock erhalten wird, der unter anderen Prädiktorblockkandidaten die minimale Verzerrung in Bezug auf den ersten Prädiktorblock ($BP_{opt}$) hat,
wobei der Codierungsparameter der Gruppe angehört, die umfasst:

- eine Transformationsoperation,
- ein Quantisierungsvektor-Dictionary,
- einen Entropiecodierer,
- eine skalare Quantisierungsoperation.

3. Computerprogramm mit Programmcodeanweisungen, die bei der Ausführung des Programms auf einem Computer die Schritte des Codierungsverfahrens nach Anspruch 1 ausführen.

4. Computerlesbares Speichermedium, auf dem ein Computerprogramm gespeichert ist, das Programmcodeanweisungen umfasst, die bei der Ausführung des Programms durch einen Computer die Schritte des Codierungsverfahrens nach Anspruch 1 ausführen.

5. Verfahren zur Decodierung eines Datensignals (FI), das für mindestens ein in Blöcke unterteiltes Bild ($IC_j$) repräsentativ ist, wobei das Verfahren für einen zu decodierenden aktuellen Block ($B_u$) implementiert:

- eine Bestimmung (D2), in dem Datensignal, eines Restblocks ($Br_u$) bezüglich des zu decodierenden aktuellen Blocks,
- eine Bestimmung (D31) eines ersten Prädiktionstyps, Inter, des aktuellen Blocks,
- eine Bestimmung (D32) eines dem ersten Prädiktionstyp zugeordneten Prädiktionsmodus,
- ein Erhalten (D4) eines ersten Prädiktorblocks ($BP_{opt}$) ausgehend von dem bestimmten Prädiktionsmodus,

wobei das Decodierungsverfahren **dadurch gekennzeichnet ist, dass** es umfasst:

- ein Auswählen (D6b) eines Prädiktionsmodus, der einer Prädiktion eines zweiten Typs, Intra, zugeordnet ist, der vom ersten Typ verschieden ist,
- eine Rekonstruktion (D7b)-(D8b) des aktuellen Blocks ausgehend von dem bestimmten Restblock ($Br_u$), dem erhaltenen ersten Prädiktorblocks ($BP_{opt}$) und einem ausgehend vom ausgewählten Prädiktionsmodus bestimmten Decodierungsparameter,

wobei das Auswählen des Prädiktionsmodus in Abhängigkeit von dem ersten Prädiktorblock ($BP_{opt}$) implementiert wird, der ausgehend von dem dem ersten Prädiktionstyp zugeordneten Prädiktionsmodus erhalten wird,
wobei der ausgewählte Prädiktionsmodus derjenige ist, von dem ausgehend ein zweiter Prädiktorblock erhalten wird, der unter anderen Prädiktorblockkandidaten die minimale Verzerrung in Bezug auf den ersten Block ($BP_{opt}$) hat,
wobei der Decodierungsparameter der Gruppe angehört, die umfasst:

- eine Transformationsoperation,
- ein Quantisierungsvektor-Dictionary,
- einen Entropiedecodierer,
- eine skalare Quantisierungsoperation.

6. Vorrichtung zur Decodierung eines Datensignals (F1), das für mindestens ein in Blöcke unterteiltes Bild ($IC_j$) repräsentativ ist, die für einen zu decodierenden aktuellen Block ($B_u$) implementiert:

- Bestimmungsmittel (MI_DO1) zum Bestimmen, in dem Datensignal, eines Restblocks ($Br_u$) bezüglich des zu decodierenden aktuellen Blocks,
- Prädiktionsmittel ($PRED^{-1}$_DO1), um zu bestimmen:

• einen ersten Prädiktionstyp, Inter, des aktuellen Blocks,
• einen dem ersten Prädiktionstyp zugeordneten Prädiktionsmodus,

wobei die Prädiktionsmittel dazu ausgestaltet sind, einen ersten Prädiktorblock ($BP_{opt}$) ausgehend von dem bestimmten Prädiktionsmodus zu erhalten,
wobei die Decodierungsvorrichtung **dadurch gekennzeichnet ist, dass** sie umfasst:
- Auswählmittel (CAL1_DO1) zum Auswählen eines Prädiktionsmodus, der einer Prädiktion eines zweiten Typs, Intra, zugeordnet ist, der vom ersten Typ verschieden ist,
- Rekonstruktionsmittel (MD_D01, $MQ^{-1}$_DO1, $MT^{-1}$_DO1, CAL2_DO1) zum Rekonstruieren des aktuellen Blocks ausgehend von dem bestimmten Restblock ($Br_u$), dem erhaltenen ersten Prädiktorblock ($BP_{opt}$) und einem ausgehend vom ausgewählten Prädiktionsmodus bestimmten Decodierungsparameter,

wobei der Prädiktionsmodus in Abhängigkeit von dem ersten Prädiktorblock ($BP_{opt}$) ausgewählt wird, der ausgehend von dem dem ersten Prädiktionstyp zugeordneten Prädiktionsmodus erhalten wird,
wobei der ausgewählte Prädiktionsmodus derjenige ist, von dem ausgehend ein zweiter Prädiktorblock erhalten wird, der unter anderen Prädiktorblockkandidaten die minimale Verzerrung in Bezug auf den ersten Prädiktorblock ($BP_{opt}$) hat,
wobei der Decodierungsparameter der Gruppe angehört, die umfasst:

- eine Transformationsoperation,
- ein Quantisierungsvektor-Dictionary,

- einen Entropiedecodierer,
- eine skalare Quantisierungsoperation.

7. Computerprogramm mit Programmcodeanweisungen, die bei der Ausführung des Programms auf einem Computer die Schritte des Decodierungsverfahrens nach Anspruch 5 ausführen.

8. Computerlesbares Speichermedium, auf dem ein Computerprogramm gespeichert ist, das Programmcodeanweisungen umfasst, die bei der Ausführung des Programms durch einen Computer die Schritte des Decodierungsverfahrens nach Anspruch 5 ausführen.

**Claims**

1. Method for coding at least one image ($IC_j$) split into blocks, implementing, for a current block ($B_u$) to be coded:

   - a determination (C31) of a first type of prediction, Inter, of the current block,
   - a determination (C32) of a mode of prediction associated with the first type of prediction,
   - an obtaining of a first predictor block ($BP_{opt}$) on the basis of the mode of prediction determined,
   - a calculation (C5a); (C5b) of a residual block ($Br_u$) which is representative of the difference between the first predictor block obtained ($BP_{opt}$) and the current block ($B_u$),

   said coding method being **characterized in that** it comprises:

   - a selection (C6b) of a mode of prediction associated with a prediction of a second type, Intra, different from said first type,
   - a coding (C7b) of the residual block ($Br_u$) with the aid of a coding parameter determined on the basis of the prediction mode selected,

   in which the selection of the mode of prediction is implemented as a function of the first predictor block ($BP_{opt}$) obtained on the basis of the mode of prediction associated with the first type of prediction,
   in which the selected mode of prediction is that on the basis of which a second predictor block is obtained which, from among other candidate predictor blocks, has the minimum distortion in relation to the first predictor block ($BP_{opt}$),
   in which the coding parameter belongs to the group comprising:

   - a transform operation,
   - a dictionary of quantization vectors,
   - an entropy coder,
   - a scalar quantization operation.

2. Coding device (CO1) for coding at least one image ($IC_j$) split into blocks, comprising, for a current block ($B_u$) to be coded:

   - means (PRED_CO1) of prediction for determining:

     • a first type of prediction, Inter, of the current block,
     • a mode of prediction associated with the first type of prediction,

   said prediction means being configured to obtain a first predictor block ($BP_{opt}$) on the basis of the mode of prediction determined,
   - means (CAL2_CO1) for calculating a residual block ($Br_u$) which is representative of the difference between the first predictor block obtained ($BP_{opt}$) and the current block ($B_u$),

   said coding device being **characterized in that** it comprises:

   - means (CAL3_CO1) for selecting a mode of prediction associated with a prediction of a second type, Intra, different from said first type,
   - means (MT_CO1, MQ_CO1, MC_CO1) for coding the residual block ($Br_u$) calculated with the aid of a coding parameter determined on the basis of the prediction mode selected,

in which the mode of prediction is selected as a function of the first predictor block ($BP_{opt}$) obtained on the basis of the mode of prediction associated with the first type of prediction,

in which the selected mode of prediction is that on the basis of which a second predictor block is obtained which, from among other candidate predictor blocks, has the minimum distortion in relation to the first predictor block ($BP_{opt}$),

in which the coding parameter belongs to the group comprising:

- a transform operation,
- a dictionary of quantization vectors,
- an entropy coder,
- a scalar quantization operation.

3. Computer program comprising program code instructions for the execution of the steps of the coding method according to Claim 1, when said program is executed on a computer.

4. Recording medium readable by a computer on which is recorded a computer program comprising program code instructions for the execution of the steps of the coding method according to Claim 1, when said program is executed by a computer.

5. Method for decoding a data signal (F1) representative of at least one image ($IC_j$) split into blocks, implementing, for a current block ($B_u$) to be decoded:

- a determination (D2), in said data signal, of a residual block ($Br_u$) relating to the current block to be decoded,
- a determination (D31) of a first type of prediction, Inter, of the current block,
- a determination (D32) of a mode of prediction associated with said first type of prediction,
- an obtaining (D4) of a first predictor block ($BP_{opt}$) on the basis of said mode of prediction determined,

said decoding method being **characterized in that** it comprises:

- a selection (D6b) of a mode of prediction associated with a prediction of a second type, Intra, different from said first type,
- a reconstruction (D7b)-(D8b) of the current block on the basis of the residual block ($Br_u$) determined, of the first predictor block ($BP_{opt}$) obtained and of a decoding parameter determined on the basis of the prediction mode selected,

in which the selection of the mode of prediction is implemented as a function of the first predictor block ($BP_{opt}$) obtained on the basis of the mode of prediction associated with the first type of prediction,

in which the selected mode of prediction is that on the basis of which a second predictor block is obtained which, from among other candidate predictor blocks, has the minimum distortion in relation to the first block ($BP_{opt}$),

in which the decoding parameter belongs to the group comprising:

- a transform operation,
- a dictionary of quantization vectors,
- an entropy decoder,
- a scalar quantization operation.

6. Device for decoding a data signal (F1) representative of at least one image ($IC_j$) split into blocks, comprising, for a current block ($B_u$) to be decoded:

- means (MI_DO1) for determining, in said data signal, a residual block ($Br_u$) relating to the current block to be decoded,
- means ($PRED^{-1}$_DO1) of prediction for determining:

 • a first type of prediction, Inter, of the current block,
 • a mode of prediction associated with the first type of prediction,

said prediction means being configured to obtain a first predictor block ($BP_{opt}$) on the basis of the mode of prediction determined,

said decoding device being **characterized in that** it comprises:

- means (CAL1_DO1) for selecting a mode of prediction associated with a prediction of a second type, Intra, different from said first type,
- means (MD_DO1, MQ$^{-1}$_DO1, MT$^{-1}$_DO1, CAL2_DO1) for reconstructing the current block on the basis of the residual block (Br$_u$) determined, of the first predictor block (BP$_{opt}$) obtained and of a decoding parameter determined on the basis of the prediction mode selected,

in which the mode of prediction is selected as a function of the first predictor block (BP$_{opt}$) obtained on the basis of the mode of prediction associated with the first type of prediction,
in which the selected mode of prediction is that on the basis of which a second predictor block is obtained which, from among other candidate predictor blocks, has the minimum distortion in relation to the first predictor block (BP$_{opt}$),
in which the decoding parameter belongs to the group comprising:

- a transform operation,
- a dictionary of quantization vectors,
- an entropy decoder,
- a scalar quantization operation.

7. Computer program comprising program code instructions for the execution of the steps of the decoding method according to Claim 5, when said program is executed on a computer.

8. Recording medium readable by a computer on which is recorded a computer program comprising program code instructions for the execution of the steps of the decoding method according to Claim 5, when said program is executed by a computer.

FIG.1A

C1 — SUBDIVISION $IC_j$ / $B_1$, $B_2$, ..., $B_u$, ..., $B_S$ $1 \leq u \leq S$

$IC_j$

C2 — SÉLECTION $B_u$

$B_u$

C3
C31 — DÉTERMINATION PREMIER TYPE DE PRÉDICTION
C32 — DÉTERMINATION MODE DE PRÉDICTION

$BP_{opt}$

C4 — $1^{ER}$ TYPE ?

Intra / Inter

C5a — $B_u - BP_{opt}$
$Br_u$

C6a — CODAGE $Br_u$
C61a — TRANSFORM.
$Bt_u$
C62a — QUANT.
$Bq_u$
C63a — COD. ENTROP.

C5b — $B_u - BP_{opt}$
$Br_u$

C6b — SÉLECTION MODE DE PRÉDICTION D'UN 2EME TYPE
$MP'_{opt}$

C7b — CODAGE $Br_u$
C71b — TRANSFORM.
$Bt_u$
C72b — QUANT.
$Bq_u$
C73b — COD. ENTROP.

paramètre
paramètre
paramètre

C8 — CONSTRUCTION FLUX
$IBP_{opt}$
F1

$1 \leq u \leq S$

## FIG.1B

1$^{ER}$ TYPE DE PRÉDICTION=INTRA

$Br_u$

COMPARAISON $Br_u$ AVEC VECTEURS DE QUANTIFICATION  PRÉDÉTERMINÉS — C110a

$CBK_{opt}$

SÉLECTION VECTEUR DE QUANTIFICATION DU DICTIONNAIRE $CBK_{opt}$ SELON CRITÈRE PRÉDÉTERMINÉ — C111a

$V_{opt}$

COD. $V_{opt}$ — C112a

C113a

$Br_u - V_{opt}$

$BSr_u$

C114a
CODAGE $BSr_u$

C1141a
TRANSFORM.

$BSt_u$

C1142a
QUANT.

$BSq_u$

C1143a
COD. ENTROP.

$IBP_{opt}$  $IV_{opt}$

CONSTRUCTION FLUX — C115a

F2

C116a

CRITÈRE DE MAJ DU DICTIONNAIRE REMPLI ?.

N            O

C117a

MAJ

C118a

SELECT. BLOC SUIVANT

C119a

N

DERNIER BLOC IMAGE $IC_j$ ?

O

C120a

N

IMAGE SUIVANTE $IC_{j+1}$ Intra ?

O

C117a

C1-fig.1A

EP 3 259 909 B1

## FIG.1C

1$^{ER}$ TYPE PRÉDICTION=INTER

$Br_u$

SÉLECTION MODE DE PRÉDICTION D'UN 2EME TYPE — C110b

$MP'_{opt}$

SÉLECTION DICTIONNAIRE DE QUANTIFICATION — C111b

$CBK_{opt}$

SÉLECTION VECTEUR DE QUANTIFICATION DU DICTIONNAIRE $CBK_{opt}$ SELON CRITÈRE PRÉDÉTERMINÉ — C112b

$V_{opt}$

C114b

COD. $V_{opt}$ — C113b

$Br_u - V_{opt}$

C115b

$BSr_u$

CODAGE $BSr_u$

C1151b — TRANSFORM.

$BSt_u$

C1152b — QUANT.

$BSq_u$

C1153b — COD. ENTROP.

$IBP_{opt}$   $IV_{opt}$

CONSTRUCTION FLUX — C116b

F2

C117b

CRITÈRE DE MAJ DU DICTIONNAIRE REMPLI ?.

N          O

MAJ

C118b

C119b

SELECT. BLOC SUIVANT

C120b

N

DERNIER BLOC IMAGE $IC_j$ ?

O

C121b

N

IMAGE SUIVANTE $IC_{j+1}$ Intra ?

O

C118b

C1-fig.1A

EP 3 259 909 B1

FIG.2A

EP 3 259 909 B1

FIG.2B

CAL3_DO1

D

MP'$_{opt}$

MEM_DO1

TAMP_DO1

IBP$_{opt}$

BP$_{opt}$

PRED$^{-1}$_DO1   CAL1_DO1

PG_DO1

F1

μP

Bq$_u$

BDq$_u$

BDt$_u$

BDr$_u$

BDr$_u$+BP$_{opt}$

BD$_u$

UT_DO1   MI_DO1

MQ$^{-1}$_DO1   MT$^{-1}$_DO1

CAL2_DO1

RAM_DO1

URI1

ID$_j$

MD_DO1

FIG.3A      DO1

EP 3 259 909 B1

CAL6_DO2

CAL4_DO2

$IV_{opt}$

$V_{opt}$

$CBK_{opt}$

MEM_DO2

TAMP_DO2

CAL8_DO2

PG_DO2

$CBK_1$
$CBK_2$
.
.
$CBK_W$

DB_DO2

CAL5_DO2

D

CAL3_DO2

CAL2_DO2

$IBP_{opt}$

$BP_{opt}$

$PRED^{-1}$_DO2

CAL1_DO2

$BSDr_u+$
$BP_{opt} + V_{opt}$

F2

μP

$BSq_u$

$BSDq_u$

$BDt_u$

$BSDr_u$

$BD_u$

UT_DO2

MI_DO2

$MQ^{-1}$_DO2

$MT^{-1}$_DO2

URI2

RAM_DO2

$ID_j$

CAL7_DO2

MD_DO2

FIG.3B

DO2

F1

IDENTIFICATION $Bq_1, Bq_2, ..., Bq_u, ..., Bq_S$ (1≤u≤S) — D1

SELECT. BLOC RÉSIDU QUANT. COURANT $Bq_u$ — D2

D3
DÉTERMINATION PREMIER TYPE DE PRÉDICTION — D31
DÉTERMINATION MODE DE PRÉDICTION — D32

Intra/Inter    $IBP_{opt}$

PRÉDICTION INVERSE D'UN PREMIER TYPE — D4

$BP_{opt}$    D5

Intra    1$^{ER}$ TYPE ?    Inter

D6a — DÉCODAGE $Bq_u$
D61a — DECOD. ENTROP.
$BDq_u$
D62a — DEQUANT.
$BDt_u$
D63a — TRANSFORM. INV.
$BDr_u$
D7a — $BDr_u+BP_{opt}$

D6b — SÉLECTION MODE DE PRÉDICTION D'UN 2EME TYPE
$MP'^{-1}_{opt}$
D7b — DÉCODAGE $Bq_u$
D71b — DECOD. ENTROP.
$BDq_u$
D72b — DEQUANT.
$BDt_u$
D73b — TRANSFORM. INV.
$BDr_u$
D8b — $BDr_u+BP_{opt}$

paramètre
paramètre
paramètre

$BD_u$

D9 — ÉCRITURE BLOC DÉCODÉ COURANT
$ID_j$

FIG.4A

EP 3 259 909 B1

# FIG.4B

$1^{ER}$ TYPE DE PRÉDICTION INVERSE=INTRA

D110a — DECOD. $IV_{opt}$

D111a — ASSOCIATION

$V_{opt}$

D112a — SÉLECTION DICTIONNAIRE DE QUANTIFICATION

$CBK_{opt}$

D113a — DÉCODAGE $BSq_u$

D1131a — DECOD. ENTROP.

$BSDq_u$

D1132a — DEQUANT.

$BSDt_u$

D1133a — TRANSFORM. INV.

$BSDr_u$

$V_{opt}$  $BP_{opt}$

D114a — $BSDr_u + BP_{opt} + V_{opt}$

$BD_u$

D115a — ÉCRITURE BLOC DÉCODÉ COURANT

$ID_j$

D116a — CRITÈRE DE MAJ DU DICTIONNAIRE REMPLI ?

N    O — D117a

D118a    MAJ

SELECT. BLOC RÉSIDU QUANT. SUIVANT

D119a — DERNIER BLOC RÉSIDU QUANT. IMAGE $IC_j$ A DÉCODER ?

N

O

D120a — IMAGE SUIVANTE $IC_{j+1}$ A DÉCODER Intra ?

N    O

D1-fig.4A    D117a

EP 3 259 909 B1

## FIG.4C

1<sup>ER</sup> TYPE DE PRÉDICTION INVERSE=INTER

D110b — DECOD. IV$_{opt}$

D111b — ASSOCIATION

V$_{opt}$

D112b — SÉLECTION MODE DE PRÉDICTION D'UN 2EME TYPE

MP'$_{opt}$

D113b — SÉLECTION DICTIONNAIRE DE QUANTIFICATION

CBK$_{opt}$

D114b — DÉCODAGE BSq$_u$

D1141b — DECOD. ENTROP.

BSDq$_u$

D1142b — DEQUANT.

BSDt$_u$

D1143b — TRANSFORM. INV.

BSDr$_u$

V$_{opt}$ BP$_{opt}$

D115b — BSDr$_u$+ BP$_{opt}$ + V$_{opt}$

BD$_u$

D116b — ÉCRITURE BLOC DÉCODÉ COURANT

ID$_j$

D117b — CRITÈRE DE MAJ DU DICTIONNAIRE REMPLI ?

N — O — D118b — MAJ

D119b — SELECT. BLOC RÉSIDU QUANT. SUIVANT

D120b — DERNIER BLOC RÉSIDU QUANT. IMAGE ICj A DÉCODER ?

N — O

D121b — IMAGE SUIVANTE IC$_{j+1}$ A DÉCODER Intra ?

N — O

D1-fig.4A — D118b

EP 3 259 909 B1

**EP 3 259 909 B1**

## RÉFÉRENCES CITÉES DANS LA DESCRIPTION

**Documents brevets cités dans la description**

• EP 1549074 A1